(19) **Europäisches Patentamt / European Patent Office / Office européen des brevets**

(11) **EP 4 411 887 A1**

(12) **EUROPEAN PATENT APPLICATION**
published in accordance with Art. 153(4) EPC

(43) Date of publication:
07.08.2024 Bulletin 2024/32

(21) Application number: 22875531.0

(22) Date of filing: 30.06.2022

(51) International Patent Classification (IPC):
$H01M\ 4/525^{(2010.01)}$    $H01G\ 11/38^{(2013.01)}$
$H01M\ 4/131^{(2010.01)}$    $H01M\ 4/36^{(2006.01)}$
$H01M\ 4/505^{(2010.01)}$

(52) Cooperative Patent Classification (CPC):
H01G 11/38; H01M 4/131; H01M 4/36;
H01M 4/505; H01M 4/525; Y02E 60/10

(86) International application number:
PCT/JP2022/026405

(87) International publication number:
WO 2023/053652 (06.04.2023 Gazette 2023/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.09.2021 JP 2021160044

(71) Applicant: Zeon Corporation
Tokyo 100-8246 (JP)

(72) Inventors:
• ASAI, Kazuki
Tokyo 100-8246 (JP)
• SUGIMOTO, Takumi
Tokyo 100-8246 (JP)
• OSHIDA, Noriyuki
Tokyo 100-8246 (JP)

(74) Representative: Maiwald GmbH
Elisenhof
Elisenstraße 3
80335 München (DE)

(54) **COMPOSITE PARTICLES, ELECTRODE FOR ELECTROCHEMICAL ELEMENT, AND ELECTROCHEMICAL ELEMENT**

(57) Composite particles contain an electrode active material, a conductive material, and a binder. These composite particles have an average value of area-equivalent diameter of not less than 20 $\mu$m and not more than 250 $\mu$m, a coefficient of variation of area-equivalent diameter, calculated according to formula 1: (standard deviation of area-equivalent diameter/average value of area-equivalent diameter) $\times$ 100, of not less than 5% and not more than 50%, and a coefficient of density, calculated according to formula 2: compressed density/bulk density, of not less than 1.3 and not more than 3.5.

EP 4 411 887 A1

**Description**

TECHNICAL FIELD

The present disclosure relates to composite particles, an electrode for an electrochemical device, and an electrochemical device.

BACKGROUND

Electrochemical devices such as lithium ion secondary batteries have characteristics such as compact size, light weight, high energy-density, and the ability to be repeatedly charged and discharged, and are used in a wide variety of applications.

Various improvements are being made to materials used to form electrodes for electrochemical devices with the aim of improving electrochemical device performance. An electrode for an electrochemical device has a structure in which an electrode mixed material layer is disposed on an electrode substrate. The electrode mixed material layer contains an electrode active material as a main component and may contain other components such as a conductive material and a binder as necessary in order to impart characteristic functions such as electrical conductivity, close adherence, and flexibility to the electrode. From a viewpoint of improving electrochemical device performance, it is preferable that the electrode active material and other components are uniformly dispersed in the electrode mixed material layer.

With regards to methods of forming electrode mixed material layers, a method in which a slurry composition containing an electrode active material, a conductive material, a binder, and a solvent is applied onto and dried on an electrode substrate to form an electrode mixed material layer and a method in which composite particles containing an electrode active material, a conductive material, a binder, and a solvent are pressure formed on an electrode substrate to form an electrode mixed material layer, for example, have previously been studied.

Composite particles having various attributes according to various production methods have previously been studied (for example, refer to Patent Literature (PTL) 1 to 3).

CITATION LIST

Patent Literature

PTL 1: WO2005/124801A1
PTL 2: JP2006-060193A
PTL 3: WO2015/029829A1

SUMMARY

(Technical Problem)

However, with regards to the conventional granulated particles described above, there is room for further improvement of properties of an electrode that is formed using the composite particles and an electrochemical device that includes this electrode.

Accordingly, one object of the present disclosure is to provide composite particles that can increase the flexibility of an electrode and inhibit cracking of an electrode active material in the electrode, and that can also improve cycle characteristics and rate characteristics of an electrochemical device including the electrode.

Another object of the present disclosure is to provide an electrode for an electrochemical device containing presently disclosed composite particles and an electrochemical device including this electrode for an electrochemical device.

(Solution to Problem)

The inventors conducted diligent investigation with the aim of solving the problem set forth above. The inventors made a new discovery that through composite particles having an average value of area-equivalent diameter, a coefficient of variation of area-equivalent diameter, and a coefficient of density that are within specific ranges, it is possible to improve properties of an obtained electrode and electrochemical device, and, in this manner, the inventors completed the present disclosure.

[1] Specifically, the present disclosure aims to advantageously solve the problem set forth above, and presently disclosed composite particles comprise an electrode active material, a conductive material, and a binder, wherein the composite particles have

an average value of area-equivalent diameter of not less than 20 $\mu$m and not more than 250 $\mu$m,
a coefficient of variation of area-equivalent diameter calculated according to formula 1:

(standard deviation of area-equivalent diameter/average value of area- equivalent diameter) $\times$ 100

 of not less than 5% and not more than 50%, and
a coefficient of density calculated according to formula 2:

$$\text{compressed density/bulk density}$$

of not less than 1.3 and not more than 3.5.

Through the composite particles having an average value of area-equivalent diameter, a coefficient of variation of area-equivalent diameter, and a coefficient of density that are within specific ranges, it is possible to increase the flexibility of an electrode and inhibit cracking of the electrode active material in the electrode, and it is also possible to improve cycle characteristics and rate characteristics of an electrochemical device including the electrode. Note that the average value of area-equivalent diameter, the coefficient of variation of area-equivalent diameter, and the coefficient of density can be measured according to methods described in the EXAMPLES section of the present specification.

[2] The presently disclosed composite particles according to the foregoing [1] preferably have a volume resistivity of not less than 1 $\Omega$·cm and not more than 3,000 $\Omega$·cm. The volume resistivity of the composite particles can be measured according to a method described in the EXAMPLES section of the present specification.

[3] The presently disclosed composite particles according to the foregoing [1] or [2] preferably have an area circularity of not less than 0.50 and not more than 0.93 and a convexity of not less than 0.70 and not more than 0.97. When the area circularity and convexity of the composite particles are within the ranges set forth above, it is possible to further increase the flexibility of an electrode and further inhibit cracking of the electrode active material in the electrode, and it is also possible to further improve cycle characteristics and rate characteristics of an electrochemical device including the electrode. The area circularity and the convexity of the composite particles can be measured according to methods described in the EXAMPLES section of the present specification.

[4] In the presently disclosed composite particles according to any one of the foregoing [1] to [3], the binder is preferably a polymeric material that dissolves in a non-aqueous solvent having a boiling point of 95°C or lower at 1 atm. When the binder is a polymeric material that dissolves in a non-aqueous solvent having a boiling point of 95°C or lower at 1 atm, it is possible to inhibit degradation of the polymeric material caused by residual solvent and to enhance long life characteristics of an obtained electrochemical device.

[5] Moreover, the present disclosure aims to advantageously solve the problem set forth above, and a presently disclosed electrode for an electrochemical device comprises an electrode mixed material layer containing the composite particles according to any one of the foregoing [1] to [4]. An electrode for an electrochemical device that includes an electrode mixed material layer containing the composite particles has excellent flexibility, little cracking of the electrode active material included therein, and can improve cycle characteristics and rate characteristics of an electrochemical device that includes the electrode.

[6] Furthermore, the present disclosure aims to advantageously solve the problem set forth above, and a presently disclosed electrochemical device comprises the presently disclosed electrode for an electrochemical device set forth above. An electrochemical device that includes the presently disclosed electrode for an electrochemical device has excellent cycle characteristics and rate characteristics.

(Advantageous Effect)

According to the present disclosure, it is possible to provide composite particles that can increase the flexibility of an electrode and inhibit cracking of an electrode active material in the electrode, and that can also improve cycle characteristics of an electrochemical device including the electrode.

Moreover, according to the present disclosure, it is possible to provide an electrode for an electrochemical device containing the presently disclosed composite particles and an electrochemical device including this electrode for an electrochemical device.

BRIEF DESCRIPTION OF THE DRAWINGS

In the accompanying drawings:

FIG. 1 is a plan view of a granulation tank according to an example; and
FIG. 2 is a cross-sectional view at a sectioning line A-A indicated in FIG. 1.

DETAILED DESCRIPTION

The following provides a detailed description of embodiments of the present disclosure.
The presently disclosed composite particles can suitably be used as a component that is compounded in an electrode mixed material layer included in an electrode of an electrochemical device such as a secondary battery.

(Composite particles)

The presently disclosed composite particles contain an electrode active material, a conductive material, and a binder. Features of the presently disclosed composite particles are that the composite particles have

an average value of area-equivalent diameter of not less than 20 $\mu$m and not more than 250 $\mu$m,
a coefficient of variation of area-equivalent diameter calculated according to formula 1:

(standard deviation of area-equivalent diameter/average value of area- equivalent diameter) $\times$ 100

of not less than 5% and not more than 50%, and
a coefficient of density calculated according to formula 2:

$$\text{compressed density/bulk density}$$

of not less than 1.3 and not more than 3.5.

Through the composite particles having an average value of area-equivalent diameter, a coefficient of variation of area-equivalent diameter, and a coefficient of density that are within specific ranges, it is possible to increase the flexibility of an electrode and inhibit cracking of the electrode active material in the electrode, and it is also possible to improve cycle characteristics and rate characteristics of an electrochemical device including the electrode.

<Average value of area-equivalent diameter>

The average value of area-equivalent diameter of the composite particles is required to be not less than 20 $\mu$m and not more than 250 $\mu$m, is preferably 30 $\mu$m or more, and more preferably 40 $\mu$m or more, and is preferably 200 $\mu$m or less, and more preferably 150 $\mu$m or less. Note that when the average value of area-equivalent diameter of the composite particles is not less than any of the lower limits set forth above, it is possible to increase the flexibility of an electrode formed using the composite particles, and it is also possible to enhance rate characteristics of an electrochemical device including the electrode. Moreover, when the average value of area-equivalent diameter of the composite particles is not more than any of the upper limits set forth above, it is possible to inhibit cracking of the electrode active material in an electrode mixed material layer, and it is also possible to enhance cycle characteristics and rate characteristics of an obtained electrochemical device.

<Coefficient of variation of area-equivalent diameter>

The coefficient of variation of area-equivalent diameter of the composite particles is required to be not less than 5% and not more than 50%, is preferably 7% or more, and more preferably 10% or more, and is preferably 45% or less, and more preferably 40% or less. When the coefficient of variation of area-equivalent diameter is not less than any of the lower limits set forth above, this enables good inhibition of cracking of the electrode active material in an electrode formed using the composite particles. Moreover, the coefficient of variation being not less than any of the lower limits set forth above means that particle diameters of the composite particles are not completely uniform and have at least a certain degree of variation. This enables efficient packing of the electrode active material in an electrode mixed material layer even in a situation in which a high density electrode mixed material layer is formed and can enhance cycle characteristics of an electrochemical device including the electrode mixed material layer. Moreover, when the coefficient of variation of area-equivalent diameter is not more than any of the upper limits set forth above, it is possible to improve the flexibility of an obtained electrode and rate characteristics of an electrochemical device including the electrode.

<Ratio of area-equivalent diameter of composite particles relative to primary particle diameter of electrode active material>

The area-equivalent diameter of the composite particles is preferably not less than 10 times, more preferably not less than 20 times, and even more preferably not less than 50 times the primary particle diameter of the electrode active material, and is preferably not more than 3,000 times, more preferably not more than 1,000 times, and even more preferably not more than 500 times the primary particle diameter of the electrode active material. When the area-equivalent diameter of the composite particles is not less than 10 times the primary particle diameter of the electrode active material, it is possible to improve handleability of the composite particles while retaining homogeneity of the composite particles. Moreover, when the area-equivalent diameter of the composite particles is not more than 3,000 times the primary particle diameter of the electrode active material, this facilitates density control in electrode production and can suppress swelling of a lithium ion battery during a cycling test.

<Coefficient of density>

The coefficient of density of the composite particles is required to be not less than 1.3 and not more than 3.5, is preferably 1.4 or more, and more preferably 1.5 or more, and is preferably 3.0 or less, and more preferably 2.7 or less. When the coefficient of density is not less than any of the lower limits set forth above, it is possible to improve the flexibility of an obtained electrode and cycle characteristics of an electrochemical device including the electrode. When the coefficient of density is not more than any of the upper limits set forth above, this enables good inhibition of cracking of the active material in an obtained electrode.

<Bulk density>

The bulk density of the composite particles is preferably not less than 1.0 and not more than 4.0. When the bulk density is not less than the lower limit set forth above, it is possible to inhibit cracking of the electrode active material in an electrode formed using the composite particles. Moreover, when the bulk density is not more than the upper limit set forth above, it is possible to increase the flexibility of an obtained electrode.

<Homogeneity>

The homogeneity of the composite particles can influence cycle characteristics of an obtained electrochemical device. The homogeneity of the composite particles can be evaluated through observation of the composite particles by a scanning electron microscope (SEM). For example, unevenness and dispersibility of the binder and the conductive material at the surface of the composite particles can be evaluated through SEM observation of the external appearance of the composite particles. Moreover, unevenness and dispersibility of the binder and the conductive material inside of the composite particles can be evaluated through SEM observation of a cross-section of the composite particles.

<Fluidity>

The fluidity of the composite particles can be evaluated through the angle of repose and the angle of collapse measured using a powder tester and can also be evaluated, as described in the EXAMPLES section of the present application, based on the thinnest doctor blade thickness with which streaks are not formed in a composite particle layer obtained by using a doctor blade to level a composite particle layer. When it is possible to form a composite particle layer without formation of streaks with a thinner doctor blade thickness, this means that the composite particles have good fluidity and that a homogeneous electrode mixed material layer can be formed. The doctor blade thickness evaluated by this method is preferably 400 $\mu$m or less, more preferably 330 $\mu$m or less, and even more preferably 250 $\mu$m or less. When the doctor blade thickness evaluated by the above-described method is not more than any of the upper limits set forth above, it is possible to form a homogeneous electrode mixed material layer. Moreover, a homogeneous electrode mixed material layer can improve rate characteristics of an electrochemical device. Furthermore, besides the above-described methods, it is also possible to evaluate the fluidity of the composite particles based on the roughness of a surface that has been leveled by a doctor blade. The surface roughness in terms of spatial volume per 5.4 mm$^2$ is

preferably 0.50 $\mu m^3$ or less, more preferably 0.30 $\mu m^3$ or less, and even more preferably 0.20 $\mu m^3$ or less. When the composite particles have excellent fluidity, it is possible to increase the smoothness of the surface of an obtained electrode and to thereby reduce internal resistance and enhance rate characteristics of an electrochemical device.

<Volume resistivity>

The volume resistivity of the composite particles is preferably 3,000 $\Omega \cdot$cm or less, more preferably 1,000 $\Omega \cdot$cm or less, even more preferably 500 $\Omega \cdot$cm or less, further preferably 250 $\Omega \cdot$cm or less, and particularly preferably 100 $\Omega \cdot$cm or less. The lower limit for the volume resistivity of the composite particles is not specifically limited and can be 1 $\Omega \cdot$cm or more, for example. When the volume resistivity of the composite particles is not more than any of the upper limits set forth above, it is possible to enhance rate characteristics of an obtained electrochemical device. Note that the volume resistivity of the composite particles can be measured by a method described in the EXAMPLES section.

<Area circularity>

The area circularity of the composite particles is preferably 0.50 or more, more preferably 0.60 or more, and even more preferably 0.70 or more, and is preferably 0.93 or less, more preferably 0.92 or less, and even more preferably 0.91 or less. When the area circularity of the composite particles is not less than any of the lower limits set forth above, it is possible to inhibit cracking of the electrode active material in an electrode formed using the composite particles. Moreover, when the area circularity of the composite particles is not more than any of the upper limits set forth above, it is possible to enhance rate characteristics of an obtained electrochemical device.

<Convexity>

The convexity of the composite particles is preferably 0.70 or more, more preferably 0.72 or more, and even more preferably 0.75 or more, and is preferably 0.97 or less, more preferably 0.94 or less, and even more preferably 0.92 or less. When the convexity of the composite particles is not less than any of the lower limits set forth above, it is possible to increase the flexibility of an electrode formed using the composite particles. Moreover, when the convexity of the composite particles is not more than any of the upper limits set forth above, it is possible to enhance cycle characteristics of an obtained electrochemical device.

<Electrode active material>

Various active materials that can be used in positive electrodes and negative electrodes of electrochemical devices such as secondary batteries may be used as the electrode active material without any specific limitations. Examples of positive electrode active materials that may be used include, but are not specifically limited to, known positive electrode active materials such as lithium-containing cobalt oxide (lithium cobalt oxide, $LiCoO_2$), lithium manganate ($LiMn_2O_4$), lithium-containing nickel oxide ($LiNiO_2$), a lithium-containing complex oxide of Co-Ni-Mn (Li(Co Mn Ni)$O_2$), a lithium-containing complex oxide of Ni-Mn-Al, a lithium-containing complex oxide of Ni-Co-Al, olivine-type lithium iron phosphate ($LiFePO_4$), olivine-type lithium manganese phosphate ($LiMnPO_4$), a $Li_2MnO_3$-$LiNiO_2$-based solid solution, a lithium-rich spinel compound represented by $Li_{1+x}Mn_{2-x}O_4$ (0 < x < 2), $Li[Ni_{0.17}Li_{0.2}Co_{0.07}Mn_{0.56}]O_2$, and $LiNi_{0.5}Mn_{1.5}O_4$. Moreover, examples of negative electrode active materials that may be used include carbon-based negative electrode active materials, metal-based negative electrode active materials, and negative electrode active materials that are combinations thereof.

The particle diameter of the electrode active material is preferably 0.03 $\mu m$ or more, more preferably 0.1 $\mu m$ or more, and even more preferably 0.5 $\mu m$ or more, and is preferably 500 $\mu m$ or less, more preferably 200 $\mu m$ or less, and even more preferably 30 $\mu m$ or less. The particle diameter of the electrode active material can be measured by laser diffraction. More specifically, it is preferable that the particle diameter D50 at which cumulative volume calculated from a small diameter end of a particle diameter distribution (by volume) measured using a laser diffraction particle size analyzer reaches 50% is taken to be the volume-average particle diameter and that this value satisfies any of the particle diameter ranges set forth above. When the particle diameter of the electrode active material is not more than any of the upper limits set forth above, it is possible to homogenize the chemical composition inside of the composite particles. Moreover, when the particle diameter of the electrode active material is not more than any of the upper limits set forth above, it is possible to increase the electrode density of an obtained electrode, and this also enables electrochemical reaction optimization when an electrochemical device is formed as a result of the electrode active material having a sufficiently large specific surface area. When the particle diameter of the electrode active material is not less than any of the lower limits set forth above, handleability of a powder material as a material in production of the composite particles improves, and producibility of the composite particles improves. Moreover, when the particle diameter of the electrode active material is not less than any of the lower limits set forth above, this enables good inhibition of electrode active material degradation when charging and discharging of an electrochemical device are performed repeatedly.

<Conductive material>

Examples of conductive materials that may be used as the conductive material include, but are not specifically limited to, conductive carbon materials such as carbon black (for example, acetylene black, Ketjenblack® (Ketjenblack is a registered trademark in Japan, other countries, or both), and furnace black), single-walled and multi-walled carbon nanotubes (multi-walled carbon nanotubes are inclusive of cup-stacked carbon nanotubes), carbon nanohorns, vapor-grown carbon fiber, milled carbon fiber obtained through pyrolysis and subsequent pulverization of polymer fiber, single-layer and multi-layer graphene, and carbon non-woven fabric sheet obtained through pyrolysis of non-woven fabric formed of polymer fiber; and fibers, foils, and the like of various metals. One of these conductive materials can be used individually, or a plurality of these conductive materials can be used in combination.

No specific limitations are placed on the quantitative ratio when the electrode active material and the conductive material are used together, and a typical quantitative ratio in which these materials are contained in an electrode for an electrochemical device can be adopted.

<Binder>

The binder may be a conjugated diene polymer, an acrylic polymer, an aromatic vinyl block polymer, a fluoropolymer, a cellulosic polymer, a cycloolefinic polymer, or the like, for example. One binder may be used individually, or two or more binders may be used in combination.

The conjugated diene polymer is a polymer that includes a conjugated diene monomer unit. Specific examples of the conjugated diene polymer include, but are not specifically limited to, a copolymer that includes an aromatic vinyl monomer unit and an aliphatic conjugated diene monomer unit (for example, a styrene-butadiene copolymer (SBR)), butadiene rubber (BR), acrylic rubber (NBR) (copolymer including an acrylonitrile unit and a butadiene unit), and hydrogenated products thereof.

The acrylic polymer may be a polymer that includes a cross-linkable monomer unit, a (meth)acrylic acid ester monomer unit, and an acidic group-containing monomer unit, for example, but is not specifically limited thereto. The proportion constituted by the (meth)acrylic acid ester monomer unit in the acrylic polymer is preferably 50 mass% or more, more preferably 55 mass% or more, and even more preferably 58 mass% or more, and is preferably 98 mass% or less, more preferably 97 mass% or less, and even more preferably 96 mass% or less.

The aromatic vinyl block polymer may be a block polymer that includes a block region formed of an aromatic vinyl monomer unit. The aromatic vinyl monomer may be styrene, styrene sulfonic acid or a salt thereof, $\alpha$-methylstyrene, p-t-butylstyrene, butoxystyrene, vinyltoluene, chlorostyrene, or vinylnaphthalene, for example, of which, styrene is preferable. The aromatic vinyl block polymer is preferably a styrene-isoprene-styrene block copolymer, a styrene-butadiene-styrene copolymer, a hydrogenated product of either thereof, or the like.

The fluoropolymer is a polymer that includes a fluorine-containing monomer unit and that may further include a unit of a monomer that does not include fluorine (non-fluorine-containing monomer). The fluorine-containing monomer may be vinylidene fluoride, tetrafluoroethylene, hexafluoropropylene, trifluorovinyl chloride, vinyl fluoride, trifluoroethylene, trifluorochloroethylene, 2,3,3,3-tetrafluoropropene, a perfluoroalkyl vinyl ether, or the like, for example, but is not specifically limited thereto. The fluoropolymer may be polytetrafluoroethylene, polychlorotrifluoroethylene, polyvinylidene fluoride, polyvinyl fluoride, a perfluoroalkoxy fluororesin, a tetrafluoroethylene-hexafluoropropylene copolymer, an ethylene-tetrafluoroethylene copolymer, an ethylene-chlorotrifluoroethylene copolymer, a vinylidene fluoride-hexafluoropropylene copolymer, or the like, but is not specifically limited thereto.

The cellulosic polymer may be cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, or the like, for example, but is not specifically limited thereto.

The cycloolefinic polymer may be a polymer (addition polymer or ring-opened polymer) synthesized using a cycloolefin compound as a monomer or a hydrogenated product thereof, or may be a hydrogenated product of a polymer obtained using an aromatic vinyl compound as a monomer, for example, but is not specifically limited thereto. Of these examples, a hydrogenated product of a ring-opened polymer obtained using a cycloolefin compound as a monomer and a hydrogenated product of a polymer obtained using an aromatic vinyl compound as a monomer are preferable due to the ease of adjusting the degree of swelling in electrolyte solution and glass-transition temperature to suitable magnitudes.

Examples of the cycloolefin compound include, but are not specifically limited to:

norbornenes that are unsubstituted or include an alkyl group such as norbornene, 5-methylnorbornene, 5-ethylnorbornene, 5-butylnorbornene, 5-hexylnorbornene, 5-decylnorbornene, 5-cyclohexylnorbornene, and 5-cyclopentylnorbornene;

norbornenes that include an alkenyl group such as 5-ethylidenenorbornene, 5-vinylnorbornene, 5-propenylnorbornene, 5-cyclohexenylnorbornene, and 5-cyclopentenylnorbornene;

norbornenes that include an aromatic ring such as 5-phenylnorbornene;

norbornenes that include an oxygen atom-containing polar group such as 5-methoxycarbonylnorbornene, 5-ethoxycarbonylnorbornene, 5-methyl-5-methoxycarbonylnorbornene, 5-methyl-5-ethoxycarbonylnorbornene, norbornenyl-2-methylpropionate, norbornenyl-2-methyloctanoate, 5-hydroxymethylnorbornene, 5,6-di(hydroxymethyl)norbornene, 5,5-di(hydroxymethyl)norbornene, 5-hydroxy-i-propylnorbornene, 5,6-dicarboxynorbornene, and 5-methoxycarbonyl-6-carboxynorbornene;

norbornenes that include a nitrogen atom-containing polar group such as 5-cyanonorbornene;

polycyclic norbornenes including three or more rings that do not include an aromatic ring structure such as dicyclopentadiene, methyldicyclopentadiene, and tricyclo[5.2.1.0²,⁶]dec-8-ene;

polycyclic norbornenes including three or more rings that include an aromatic ring such as tetracyclo[9.2.1.0²,¹⁰.0³,⁸]tetradeca-3,5,7,12-tetraene (also referred to as 1,4-methano-1,4,4a,9a-tetrahydro-9H-fluorene) and tetracyclo[10.2.1.0²,¹¹.0⁴,⁹]pentadeca-4,6,8,13-tetraene (also referred to as 1,4-methano-1,4,4a,9,9a,10-hexahydroanthracene);

tetracyclododecenes that are unsubstituted or include an alkyl group such as tetracyclododecene, 8-methyltetracyclododecene, 8-ethyltetracyclododecene, 8-cyclohexyltetracyclododecene, 8-cyclopentyltetracyclododecene, and 8-methoxycarbonyl-8-methyltetracyclo[4.4.0.1²,⁵.1⁷,¹⁰]-3-dodecene;

tetracyclododecenes that include a double bond outside of a ring such as 8-methylidenetetracyclododecene, 8-ethylidenetetracyclododecene, 8-vinyltetracyclododecene, 8-propenyltetracyclododecene, 8-cyclohexenyltetracyclododecene, and 8-cyclopentenyltetracyclododecene;

tetracyclododecenes that include an aromatic ring such as 8-phenyltetracyclododecene;

tetracyclododecenes that include an oxygen atom-containing substituent such as 8-methoxycarbonyltetracyclododecene, 8-methyl-8-methoxycarbonyltetracyclododecene, 8-hydroxymethyltetracyclododecene, 8-carboxytetracyclododecene, tetracyclododecene-8,9-dicarboxylic acid, and tetracyclododecene-8,9-dicarboxylic acid anhydride;

tetracyclododecenes that include a nitrogen atom-containing substituent such as 8-cyanotetracyclododecene and tetracyclododecene-8,9-dicarboxylic acid imide;

tetracyclododecenes that include a halogen atom-containing substituent such as 8-chlorotetracyclododecene;

tetracyclododecenes that include a silicon atom-containing substituent such as 8-trimethoxysilyltetracyclododecene; and

hexacycloheptadecenes such as a Diels-Alder adduct of a tetracyclododecene such as described above and cyclopentadiene.

Of these examples, a non-polar norbornene-based monomer is preferable as the cycloolefin compound, and a norbornene that is unsubstituted or includes an alkyl group (for example, norbornene or 8-ethyltetracyclododecene), a norbornene that includes an alkenyl group (for example, ethylidenetetracyclododecene (8-ethylidenetetracyclododecene)), dicyclopentadiene, a norbornene derivative that includes an aromatic ring (for example, tetracyclo[9.2.1.0²,¹⁰.0³,⁸]tetradeca-3,5,7,12-tetraene (also referred to as 1,4-methano-1,4,4a,9a-tetrahydro-9H-fluorene)), or a tetracyclododecene that is unsubstituted or includes an alkyl group (for example, tetracyclododecene or 8-methoxycarbonyl-8-methyltetracyclo[4.4.0.1²,⁵.1⁷,¹⁰]-3-dodecene) is more preferable as the cycloolefin compound.

Note that the optionally hydrogenated polymer obtained using a cycloolefin compound as a monomer may be a polymer obtained using only a cycloolefin compound as a monomer or may be a polymer obtained using a cycloolefin compound and a copolymerizable compound other than a cycloolefin compound as monomers, but is preferably a polymer obtained using only a cycloolefin compound as a monomer.

Moreover, the optionally hydrogenated polymer obtained using a cycloolefin compound as a monomer is preferably a polymer obtained using tetracyclododecene, dicyclopentadiene, and norbornene as monomers, and more preferably a ring-opened polymer obtained using tetracyclododecene, dicyclopentadiene, and norbornene as monomers.

Of the examples given above, it is preferable that the binder is a polymeric material that dissolves in a non-aqueous solvent having a boiling point of preferably 95°C or lower, more preferably 90°C or lower, and even more preferably 85°C or lower at 1 atm. By using a binder that can dissolve in a non-aqueous solvent having a boiling point at 1 atm that is not higher than any of the upper limits set forth above, degradation of the polymeric material caused by residual solvent is inhibited, and long life characteristics of an obtained electrochemical device can be improved. The lower limit for the boiling point at 1 atm of the non-aqueous solvent in which the binder is soluble is not specifically limited and can be 50°C or higher. Examples of solvents that satisfy this condition include cyclohexane, n-hexane, acetone, methyl ethyl ketone, ethyl acetate, tetrahydrofuran, methylene chloride, and chloroform.

EP 4 411 887 A1

<Production method of composite particles>

The presently disclosed composite particles set forth above can be produced according to any production method without any specific limitations so long as they can satisfy the essential attributes and the preferable attributes described above. In particular, it is preferable that the presently disclosed composite particles are produced using a granulation tank that includes two or more agitators having different stirring axes to one another. The following describes a production method using a granulation tank that includes two or more agitators having different stirring axes to one another as one example of a production method by which the presently disclosed composite particles can be efficiently produced.

<Granulation tank>

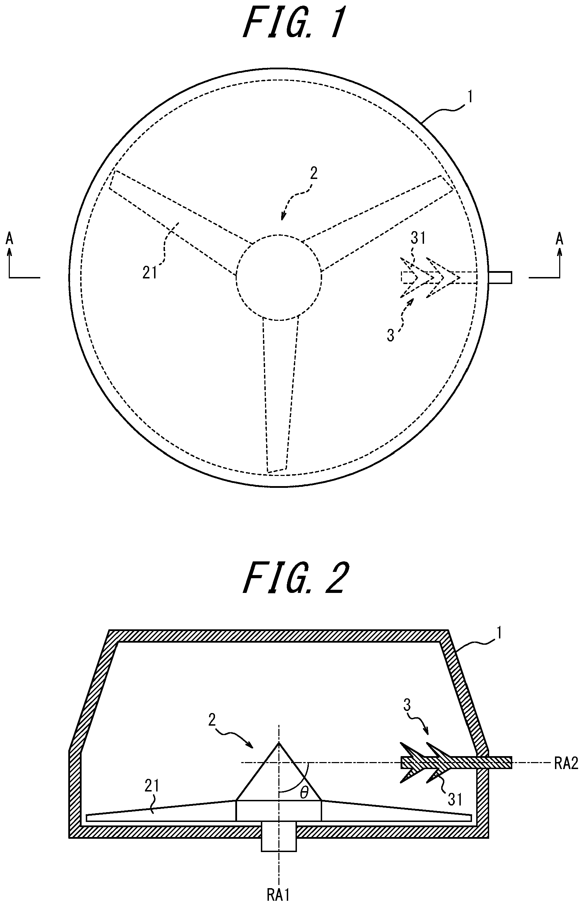

The granulation tank includes two or more agitators having different stirring axes to one another. The inclusion of two or more agitators having different stirring axes to one another increases uniformity of chemical composition of the obtained composite particles and, as a result, can enhance cycle characteristics of an electrochemical device including an electrode formed using these composite particles. A granulation tank according to one example is described with reference to FIGS. 1 and 2. FIG. 1 is a plan view of a granulation tank 1, and FIG. 2 is a cross-sectional view at a sectioning line A-A indicated in FIG. 1. The granulation tank 1 includes a main agitator 2 and an auxiliary agitator 3 having a different stirring axis to the main agitator 2. Note that the number of agitators is not specifically limited so long as it is two or more. As a result of the uniformity of chemical composition of the composite particles being increased through the inclusion of two or more agitators, it is possible to enhance cycle characteristics of an electrochemical device including an electrode formed using the composite particles.

Although not illustrated, the granulation tank 1 also includes at least one supply means that is capable of supplying a liquid composition. This supply means may be a spray nozzle that is configured so as to be capable of supplying a liquid material in the form of a mist or may be a dropping funnel. The number of supply means is not specifically limited, and a plurality of supply means may be arranged separately from one another depending on the size of the granulation tank. Moreover, although not illustrated, the granulation tank 1 can include a powder material supply port and a discharge port configured so as to be capable of discharging composite particles that are formed.

In FIG. 2, a stirring axis of the main agitator 2 is indicated by a dashed line as a first stirring axis RA1, and a stirring axis of the auxiliary agitator is indicated by a dashed line as a second stirring axis RA2. In FIG. 2, an angle $\theta$ that is formed by the first stirring axis RA1 and the second stirring axis RA2 is approximately 90°. Note that the angle formed by the first stirring axis RA1 and the second stirring axis RA2 is taken to be an angle at an acute side among angles that are formed by these two axes. The phrase "different stirring axes to one another" as used in the present specification means that an angle $\theta$ formed by the stirring axes is not less than 20° and not more than 90°. The angle $\theta$ formed by the stirring axes is preferably 30° or more, more preferably 45° or more, and even more preferably 85° or more. When the angle $\theta$ formed by the stirring axes is within any of the ranges set forth above, this enables effective stirring of a powder material and good control of the particle diameter and coefficient of variation of the obtained composite particles. As a result, flexibility of an electrode formed using the composite particles can be increased and cracking of an electrode active material in the electrode can be inhibited, and cycle characteristics of an obtained electrochemical device can be enhanced. Note that the "coefficient of variation" refers to the coefficient of variation of a particle diameter distribution of the composite particles and can be calculated according to a method described in the EXAMPLES section of the present specification as a value obtained by dividing the standard deviation of area-equivalent diameter of the composite particles by the average value of area-equivalent diameter and converting to a percentage.

No specific limitations are placed on the shape of the granulation tank so long as the granulation tank is capable of accommodating a powder material containing an electrode active material inside thereof for a specific time and is capable of performing stirring through the two or more agitators. For example, the shape of the granulation tank may be a circular tube shape in which a bottom surface and a top surface each have a circular shape and in which an upper part in a height direction is tapered like the granulation tank 1 illustrated in FIGS. 1 and 2. Note that in a case in which the shape of the granulation tank is a specific circular tube shape such as illustrated in FIGS. 1 and 2, one of the two or more stirring axes may correspond to a central axis of the circular tube and another of the stirring axes may correspond to a direction perpendicular to the central axis. Moreover, in a case in which the shape of the granulation tank is a specific circular tube shape such as illustrated in FIGS. 1 and 2, a value obtained by dividing the diameter of the bottom surface by the height (diameter/height) is preferably 0.1 or more, more preferably 0.3 or more, and even more preferably 0.5 or more, and is preferably 2.5 or less, more preferably 2.0 or less, and even more preferably 1.5 or less. This enables effective stirring of a powder material.

The main agitator 2 includes three main blades 21. No specific limitations are placed on the shape and number of main blades 21. The auxiliary agitator 3 includes two auxiliary blades 31. The auxiliary blades 31 are illustrated as anchor blades in FIGS. 1 and 2 but are not limited thereto. Moreover, the number of auxiliary blades 31 is not limited to the illustrated configuration and may be one or may be three or more. Although not illustrated, the granulation tank 1 can further include a ventilation mechanism configured such as to be capable of inhibiting a powder material from entering into driving parts of the main agitator 2 and the auxiliary agitator 3 through air ventilation.

Examples of granulation tanks satisfying conditions such as set forth above that can be used include a High Speed Mixer produced by EarthTechnica Co., Ltd., a Henschel Mixer produced by Mitsui Miike Machinery Co., Ltd., a Vertical Granulator produced by Powrex Corporation, a CF Granulator produced by Freund Corporation, a Nara Mixer and Granulator produced by Nara Machinery Co., Ltd., an SP Granulator produced by Dalton Corporation, and a Balance Gran produced by Freund Corporation.

The following describes various operations that can be performed inside of the granulation tank.

<(i) Preliminary stirring operation>

In a preliminary stirring operation, a powder material is stirred to place the powder material in a stirred state. The powder material is required to contain an electrode active material and may optionally contain a conductive material. The electrode active material and the conductive material can be any of those that were previously described. By performing the preliminary stirring operation, it is possible to enhance cycle characteristics of an electrochemical device including an electrode formed using the obtained composite particles.

It is preferable that a liquid component is not compounded in the preliminary stirring operation. The powder material can unavoidably contain a small amount of a liquid component under the influence of water or the like that can become attached during production, storage, etc. In other words, it is highly likely that the solid content concentration of the powder material at the start of the preliminary stirring operation is less than 100 mass%. From a viewpoint of enhancing properties of the obtained composite particles and production efficiency of the composite particles, it is preferable that the solid content concentration of the powder material is increased through the preliminary stirring operation being performed. Specifically, the solid content concentration of the powder material at the end of the preliminary stirring operation is preferably 95 mass% or more, more preferably 97 mass% or more, and even more preferably 98 mass% or more. The solid content concentration of the powder material can be measured by a method described in the EXAMPLES section.

The circumferential speed of the main agitator and the auxiliary agitator in the preliminary stirring operation is preferably not less than 1 m/s and not more than 20 m/s. When the circumferential speed is within this range, it is possible to increase the homogeneity of chemical composition of the obtained composite particles and to thereby inhibit cracking of the electrode active material in an obtained electrode and enhance cycle characteristics of an electrochemical device including the electrode. The main agitator and the auxiliary agitator may have the same circumferential speed or different circumferential speeds in the preliminary stirring operation. However, in a case in which the circumferential speeds of the main agitator and the auxiliary agitator differ, it is preferable that the circumferential speed of the auxiliary agitator is faster than the circumferential speed of the main agitator.

The ventilation rate in the preliminary stirring operation in terms of a value obtained by dividing the flow rate of air flowing into the granulation tank by the capacity of the granulation tank (flow rate/capacity) is preferably not less than 0.1/min and not more than 100/min. When the ventilation rate is within this range, it is possible to increase the solid content concentration of the powder material well in the preliminary stirring operation. Note that the ventilation rate can be the ventilation rate through a ventilation mechanism for preventing the powder material from entering driving parts of the main agitator and the auxiliary agitator as previously described. The temperature of ventilated air is preferably lower than 50°C, more preferably 45°C or lower, even more preferably 40°C or lower, and particularly preferably 30°C or lower.

No specific limitations are placed on the time for which the preliminary stirring operation is performed (preliminary stirring time). For example, the preliminary stirring time is preferably a time that allows the solid content concentration to reach not less than any of the preferable threshold values set forth above. The preliminary stirring time can, for example, be not less than 5 minutes and not more than 60 minutes.

Note that the preliminary stirring operation may be split into a plurality of stages. In this case, it is preferable that a preliminary stirring operation using a stirring device (hereinafter, also referred to as "stirring device A") differing from the granulation tank including agitators that is described above is performed prior to a preliminary stirring operation in the granulation tank including agitators that is described above. The stirring device A may be a dry mixing device or a wet mixing device, for example, without any specific limitations so long as it is a different stirring device to the granulation tank including agitators that is described above. Examples of dry mixing devices that can be used include a Miracle KCK produced by Asada Iron Works Co., Ltd. and a Nara Hybridization System produced by Nara Machinery Co., Ltd. Examples of wet mixing devices that can be used include a Planetary Despa produced by Asada Iron Works Co., Ltd. By performing a preliminary stirring operation using the stirring device A in this manner prior to a preliminary stirring operation using the granulation tank including agitators that is described above, it is possible to enhance rate characteristics of an obtained electrochemical device. This is thought to be because volume resistivity of the obtained composite particles can be reduced by performing a preliminary stirring operation using the stirring device A.

<(ii) Pre-composite particle formation operation>

In a pre-composite particle formation operation, a composition containing a binder and a solvent is added to the powder material that is in a stirred state to obtain pre-composite particles. The binder can be any of those that were previously described. Moreover, the mode of addition when the composition containing the binder and the solvent is added to the powder material in the pre-composite particle formation operation is not specifically limited so long as it is a mode other than single batch addition. For example, a mode of addition in which the composition is added continuously throughout the pre-composite particle formation operation or a mode of addition in which the composition is added intermittently with one or a plurality of addition suspension periods interposed while the pre-composite particle formation operation is being performed may be adopted. Of these examples, continuous addition is preferable. While the pre-composite particle formation operation is being performed (i.e., under an atmosphere where the powder material, the solvent, and the binder are all placed in a stirred state together), a particle adjustment effect can arise through collisions between particles and between particles and the solvent while pre-composite particles of the powder material and the binder are gradually formed. In other words, a pre-composite particle formation effect and a particle adjustment effect can proceed concurrently in the presence of the solvent during the pre-composite particle formation operation. In this manner, pre-composite particles can be formed while also undergoing particle adjustment in the pre-composite particle formation operation.

The addition means in addition of the composition containing the binder and the solvent to the powder material may be a spray nozzle, a dropping funnel, or the like as previously described. In particular, in a case in which a spray nozzle such as a two-fluid spray including a mechanism that pulverizes/micronizes and sprays out a liquid through gas flow is used, the gas-liquid ratio (gas volume/liquid volume) is preferably 1.30 or more, more preferably 1.40 or more, and even more preferably 1.45 or more, and is preferably 1.80 or less, more preferably 1.70 or less, and even more preferably 1.60 or less. When the gas-liquid ratio is not less than any of the lower limits set forth above, it is possible to suppress enlargement of the particle diameter of the composite particles. Moreover, when the gas-liquid ratio is not more than any of the upper limits set forth above, it is possible to inhibit the particle diameter of the composite particles from becoming excessively small. A value of spray area density $(g/mm^2/min)$ that is a value corresponding to the sprayed amount of the composition per unit area with respect to a stationary surface is preferably 0.20 $(g/mm^2/min)$ or more, more preferably 0.25 $(g/mm^2/min)$ or more, and even more preferably 0.38 $(g/mm^2/min)$ or more, and is preferably 0.60 $(g/mm^2/min)$ or less, more preferably 0.50 $(g/mm^2/min)$ or less, and even more preferably 0.41 $(g/mm^2/min)$ or less. When the value of the spray area density $(g/mm^2/min)$ is not less than any of the lower limits set forth above, it is possible to inhibit the particle diameter of the composite particles from becoming excessively small. In other words, the particle diameter of the obtained composite particles can be controlled well by controlling the gas-liquid ratio and/or the spray area density to within a suitable range.

Any solvent can be used as the solvent without any specific limitations. For example, water or an organic solvent such as N-methyl-2-pyrrolidone, cyclohexane, n-hexane, acetone, methyl ethyl ketone, ethyl acetate, tetrahydrofuran, methylene chloride, or chloroform can be used as the solvent. In particular, a non-aqueous solvent that has a boiling point of 95°C or lower at 1 atm and in which the binder is soluble, such as previously described, can suitably be used. The boiling point of the non-aqueous solvent at 1 atm is more preferably 90°C or lower, and even more preferably 85°C or lower. When the boiling point at 1 atm is not higher than any of the upper limits so forth above, it is possible to efficiently remove the solvent inside of the granulation tank and to reduce drying energy in formation of the pre-composite particles. Although no specific limitations are placed on the lower limit for the boiling point of the non-aqueous solvent at 1 atm, the boiling point is preferably 50°C or higher from a viewpoint of increasing stability in formation of the pre-composite particles. Examples of solvents satisfying this condition include those that were previously listed. One solvent may be used individually, or two or more solvents may be used in combination in a freely selected ratio.

A viscosity index of the composition containing the binder and the solvent that is continuously added into the granulation tank in the pre-composite particle formation operation is preferably not less than 100 mPa·s and not more than 1,000 mPa·s. The viscosity index of the composition that contains the binder and the solvent being within the range set forth above enables good control of the particle diameter and coefficient of variation of the obtained composite particles. Note that the viscosity index of the composition is a value obtained by dividing the viscosity of the composition by the solid content concentration and then multiplying by 100 and can be measured and calculated by a method described in the EXAMPLES section.

The circumferential speed of the main agitator and the auxiliary agitator in the pre-composite particle formation operation is preferably not less than 1 m/s and not more than 20 m/s. When the circumferential speed of the main agitator is within the range set forth above, this enables good control of the particle diameter of the obtained composite particles. Moreover, when the circumferential speed of the auxiliary agitator is within the range set forth above, this enables good control of the coefficient of variation of the obtained composite particles. Furthermore, the circumferential speed of the main agitator is preferably 6 m/s or more from a viewpoint of increasing a particle adjustment effect arising while the pre-composite particle formation operation is performed and suppressing gas evolution during high-temperature storage of an electrode formed using the composite particles.

The ventilation rate in the pre-composite particle formation operation in terms of a value obtained by dividing the flow rate of air flowing into the granulation tank by the capacity of the granulation tank (flow rate/capacity) is preferably not less than 0.1/min and not more than 100/min. When the ventilation rate is within this range, this enables good control of the amount of solvent vapor inside of the granulation tank and efficient formation of the pre-composite particles.

No specific limitations are placed on the duration (pre-composite particle formation time) of the pre-composite particle formation operation. The pre-composite particle formation time can, for example, be not less than 5 minutes and not more than 60 minutes.

<(iii) Particle adjustment operation>

In a particle adjustment operation, the pre-composite particles are stirred after addition of the composition is complete (i.e., after the pre-composite particle formation operation (ii) is complete) so as to perform particle adjustment and obtain composite particles.

The circumferential speed of the main agitator and the auxiliary agitator in the particle adjustment operation is preferably not less than 0.1 m/s and not more than 10 m/s. When the circumferential speed of the main agitator is within the range set forth above, this enables good control of the coefficient of density and area circularity of the obtained composite particles. Moreover, when the circumferential speed of the auxiliary agitator is within the range set forth above, this enables good control of the coefficient of variation and convexity of the obtained composite particles.

The ventilation rate in the particle adjustment operation in terms of a value obtained by dividing the flow rate of air flowing into the granulation tank by the capacity of the granulation tank (flow rate/capacity) is preferably not less than 0.1/min and not more than 100/min. When the ventilation rate is within this range, this enables good control of a wet state of the composite particles and efficient formation of the composite particles in the particle adjustment operation.

No specific limitations are placed on the duration (particle adjustment time) of the particle adjustment operation. For example, the particle adjustment time may be 10 seconds or more, and may be 60 minutes or less, preferably 20 minutes or less, preferably 8 minutes or less, and more preferably 3 minutes or less. By setting the time of the particle adjustment operation as not more than any of the upper limits set forth above, it is possible to reduce the amount of gas evolution when an electrode formed using the composite particles is stored under high-temperature conditions.

<Granulation tank internal temperature>

The temperature inside of the granulation tank throughout operations (i) to (iii) described above is preferably lower than 50°C, more preferably 45°C or lower, and even more preferably 40°C or lower. Through any of these temperature conditions being satisfied, it is possible to effectively inhibit degradation of the electrode active material contained in the obtained composite particles and to effectively inhibit cracking of the electrode active material in an electrode formed using the composite particles.

(Electrode for electrochemical device)

The presently disclosed electrode for an electrochemical device includes an electrode mixed material layer that contains the presently disclosed composite particles set forth above. The presently disclosed electrode for an electrochemical device has excellent flexibility, little cracking of an electrode active material included therein, and can improve cycle characteristics and rate characteristics of an electrochemical device that includes the electrode.

<Production method of electrode for electrochemical device>

The presently disclosed electrode for an electrochemical device can be produced by performing pressure forming of composite particles produced according to the presently disclosed production method set forth above on an electrode substrate so as to form an electrode mixed material layer (pressure forming operation).

[Pressure forming operation]

The pressure forming operation can be performed according to a known method. For example, composite particles produced according to the presently disclosed production method can be supplied to a roll press and be subjected to roll pressing on an electrode substrate so as to perform pressure forming of the composite particles on the electrode substrate and form an electrode mixed material layer. The pressure during pressing can be set as appropriate in accordance with the target electrode density.

The electrode substrate is a material having electrical conductivity and electrochemical durability. Specifically, a current collector made of iron, copper, aluminum, nickel, stainless steel, titanium, tantalum, gold, platinum, or the like can be used as the electrode substrate. Note that one of the above-described materials may be used individually, or two or more of the above-described materials may be used in combination in a freely selected ratio.

(Electrochemical device)

The presently disclosed electrochemical device includes the electrode for an electrochemical device set forth above. The presently disclosed electrochemical device has excellent cycle characteristics and rate characteristics as a result of including the presently disclosed electrode for an electrochemical device. The electrochemical device may be a lithium ion secondary battery, an electric double-layer capacitor, or a lithium ion capacitor, for example, without any specific limitations, and may preferably be a lithium ion secondary battery.

Although the following describes, as one example, a case in which the electrochemical device is a lithium ion secondary battery, the present disclosure is not limited to the following example. A lithium ion secondary battery corresponding to the presently disclosed electrochemical device normally includes electrodes (positive electrode and negative electrode), an electrolyte solution, and a separator and has the presently disclosed electrode for an electrochemical device as at least one of the positive electrode and the negative electrode.

<Electrodes>

Any known electrode can be used without any specific limitations as an electrode other than the presently disclosed electrode for an electrochemical device set forth above that can be used in the lithium ion secondary battery corresponding to the electrochemical device. Specifically, an electrode obtained by forming an electrode mixed material layer on a current collector by a known production method can be used as an electrode other than the electrode for an electrochemical device set forth above.

<Electrolyte solution>

The electrolyte solution is normally an organic electrolyte solution obtained by dissolving a supporting electrolyte in an organic solvent. The supporting electrolyte may, for example, be a lithium salt. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable because they readily dissolve in solvents and exhibit a high degree of dissociation, with $LiPF_6$ being particularly preferable. One electrolyte may be used individually, or two or more electrolytes may be used in combination in a freely selected ratio.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), and methyl ethyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. The concentration of the electrolyte in the electrolyte solution can be adjusted as appropriate. Known additives such as vinylene carbonate, fluoroethylene carbonate, and ethyl methyl sulfone may be added to the electrolyte solution.

<Separator>

Any known separator can be used without any specific limitations as the separator. In particular, a microporous membrane formed of a polyolefinic (polyethylene, polypropylene, polybutene, or polyvinyl chloride) resin is preferable. Moreover, the separator may be a functional layer-equipped separator that includes a functional layer (porous membrane layer or adhesive layer) at one side or both sides of a separator substrate.

<Production method of lithium ion secondary battery>

The lithium ion secondary battery can be produced by, for example, stacking the positive electrode and the negative electrode with the separator in-between, performing rolling, folding, or the like of the resultant laminate in accordance with the battery shape, as necessary, to place the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion constituted by a repeating unit (monomer unit) that is formed through polymerization of a given monomer in the polymer is normally, unless otherwise specified, the same as the ratio (charging ratio) of the given monomer among all monomers used in polymerization of the polymer.

Measurements and evaluations of various attributes in the examples and comparative examples were performed according to the following methods.

<Solid content concentration of powder material>

Wo [g] of a measurement subject was weighed onto an aluminum pan of mass Wa [g] and was heated by a 130°C hot plate for 1 hour. The mass W [g] after heating was measured, and the solid content concentration Cs [%] of the powder material was calculated from the following formula.

$$Cs = (W - Wa)/Wo \times 100 \ [\%]$$

<Viscosity index $C\eta$ of composition containing binder and solvent>

A viscosity index of a composition (binder solution) containing a binder and a solvent was calculated by the following formula from the viscosity measured by the following method and the solid content concentration measured by the previously described method.

Viscosity measurement: Viscosity $\eta$ measured at 25°C and 60 rpm using B-type viscometer (TVB-10M produced by Toki Sangyo Co., Ltd.) with used rotor changed as appropriate according to viscosity

Calculation of viscosity index: $C\eta = \eta/Cs \times 100 \ [mPa \cdot s]$

<Area-equivalent diameter, coefficient of variation of particle diameter distribution, area circularity, and convexity of composite particles>

Image analysis processing was performed with respect to composite particles produced in each example or comparative example based on an image analysis method in accordance with JIS Z 8827-1, and specific physical properties were calculated. Specifically, a Morphologi G3 produced by Malvern Panalytical Ltd. was used to perform binarization and analysis of images of 4,000 composite particles produced in each example or comparative example so as to determine the following physical properties. Note that the definitions of terms are in accordance with "Particle characterization of particulate systems-Vocabulary" of JIS Z 8890.

Average value of area-equivalent diameter: Average value $D_A$ ($\mu$m) of area-equivalent diameter of 4,000 analyzed composite particles

Coefficient of variation of area-equivalent diameter: Value CV calculated from average value $D_A$ of area-equivalent diameter of 4,000 analyzed composite particles and standard deviation $\sigma$ thereof

Coefficient of variation CV of area-equivalent diameter = Standard deviation $\sigma$ of area-equivalent diameter / Average value $D_A$ of area-equivalent diameter $\times$ 100(%)

Average area circularity: Average value $C_A$ of area circularity calculated by $4\pi A/P^2$ (A: projected area; P: perimeter) for 4,000 analyzed particles

Average convexity: Average value of values determined by dividing the perimeter of a convex circumscribing shape (minimum convex hull) by the perimeter P for all particles in an observed viewing field

<Ratio of area-equivalent diameter of composite particles relative to primary particle diameter of electrode active material>

The primary particle diameter of an electrode active material was calculated through SEM observation of composite particles obtained in each example or comparative example. Specifically, 10 composite particles serving as subjects were selected at ×500 magnification and these composite particles serving as subjects were further observed at ×10,000 magnification. The particle diameter (diameter of a circumscribed circle encompassing a particle) was measured for 100 electrode active material primary particles, and a number-average value of these particle diameters was calculated to determine the primary particle diameter. The area-equivalent diameter of the composite particles calculated as previously described was divided by the determined value for the primary particle diameter of the electrode active material so as to calculate the area-equivalent diameter of the composite particles as a multiple of the primary particle diameter of the electrode active material.

<Coefficient of density>

Coefficient of density $C\rho$ = Compressed density $\rho_p$ / Bulk density $\rho_a$ [Bulk density $\rho_a$]

The bulk density (g/cm$^3$) of composite particles was measured based on the constant volume measurement method described in JIS R 1628-1997.

[Compressed density $\rho_p$]

A circular tube-type pellet having a base area of 2 cm$^2$ (diameter: 15.97 mm) was produced by pressing 4.00 g of composite particles produced in each example or comparative example at 50 MPa, the thickness of the pellet was measured, and the compressed density was calculated.

<Fluidity (evaluation by doctor blade thickness)>

On a glass plate of 20 cm-square having a smooth surface, 5 g of composite particles produced in each example or comparative example were arranged such as to have a diameter of approximately 20 mm, and the formation or absence of streaks in a leveled composite particle layer when these composite particles were leveled using a doctor blade was judged in order to determine the thinnest doctor blade thickness at which streaks were not formed.

<Fluidity (evaluation by surface roughness)>

On a glass plate of 20 cm-square having a smooth surface, 25 g of composite particles produced in each example or comparative example were arranged such as to have a diameter of approximately 20 mm and were leveled using a 280 μm doctor blade. A laser microscope was used to measure spatial volume (μm$^3$) per 5.4 mm$^2$ with respect to the leveled surface.

<Volume resistivity>

Composite particles produced in each example or comparative example were pressure formed such as to have a diameter of 25.4 mm and a density of 3.2 g/cm$^3$ in order to produce a pellet. The electrical resistance of this pellet was measured using a digital LCR meter (produced by Yokogawa HP; instrument name: 4261A). The measured electrical resistance value was converted to a volume resistivity (Ω·cm).

<Electrode flexibility>

A positive electrode produced in each example or comparative example was wound around rods of different diameters and the occurrence or absence of cracking of the positive electrode mixed material layer was evaluated. Winding around a rod of smaller diameter without cracking of the positive electrode mixed material layer indicates that the electrode has excellent flexibility and windability. The flexibility of the electrode was evaluated by the following standard according to the diameter of a thinnest rod with which cracking of the positive electrode mixed material layer did not occur.

A: No cracking even upon winding around rod of 1.50 mm in diameter
B: No cracking even upon winding around rod of 1.80 mm in diameter
C: No cracking even upon winding around rod of 2.10 mm in diameter
D: No cracking even upon winding around rod of 3.00 mm in diameter

<Presence of active material cracking>

A cross-sectional SEM image of a positive electrode produced in each example or comparative example was observed at ×1,000 and was evaluated as follows according to the number of active material cracks that were observed.

A: Electrode active material cracks not observed
B: Number of electrode active material cracks is not less than 1 and less than 3
C: Number of positive electrode active material cracks is not less than 3 and less than 5
D: Number of positive electrode active material cracks is 5 or more

<Cycle characteristics>

A lithium ion secondary battery produced as an electrochemical device in each example or comparative example was left at rest at a temperature of 25°C for 5 hours after injection of electrolyte solution. Next, the lithium ion secondary battery was charged to a cell voltage of 3.65 V by a 0.2C constant-current method at a temperature of 25°C and was then subjected to 12 hours of aging at a temperature of 60°C. The lithium ion secondary battery was subsequently discharged to a cell voltage of 3.00 V by a 0.2C constant-current method at a temperature of 25°C. Thereafter, CC-CV charging (upper limit cell voltage 4.20 V) was performed by a 0.2C constant-current method and CC discharging was performed to 3.00 V by a 0.2C constant-current method. This charging and discharging at 0.2C was repeated three times to obtain an evaluation cell.
Next, the evaluation cell was subjected to 100 cycles of a charge/discharge operation with a cell voltage of 4.20 V to 3.00 V and a charge/discharge rate of 0.5C in an environment having a temperature of 45°C. The discharge capacity of the 1st cycle was defined as X1, and the discharge capacity of the 100th cycle was defined as X2. The discharge capacity X1 and the discharge capacity X2 were used to calculate a capacity maintenance rate (= (X2/X1) × 100(%)), which was then evaluated by the following standard. A larger value for the capacity maintenance rate indicates that the lithium ion secondary battery has better cycle characteristics.

A: Capacity maintenance rate of 90% or more
B: Capacity maintenance rate of not less than 85% and less than 90%
C: Capacity maintenance rate of not less than 80% and less than 85%
D: Capacity maintenance rate of less than 80%

<Amount of gas evolution during high-temperature storage>

An evaluation cell prepared as previously described in the "Cycle characteristics" section was CC-CV charged (upper limit cell voltage 4.20 V) by a 0.2C constant-current method at a temperature of 25°C and was subsequently stored in a 60°C constant-temperature environment for 1 week. The cell volume was measured before and after storage, the increase of volume was taken to be the amount of gas evolution, and the amount of gas evolution was evaluated by the following standard.

A: Amount of gas evolution of less than 5%
B: Amount of gas evolution of not less than 5% and less than 10%
C: Amount of gas evolution of not less than 10% and less than 20%
D: Amount of gas evolution of 20% or more

<Rate characteristics>

A lithium ion secondary battery produced as an electrochemical device in each example or comparative example was left at rest at a temperature of 25°C for 5 hours after injection of electrolyte solution. Next, the lithium ion secondary battery was charged to a cell voltage of 3.65 V by a 0.2C constant-current method at a temperature of 25°C and was then subjected to 12 hours of aging at a temperature of 60°C. The lithium ion secondary battery was subsequently discharged to a cell voltage of 3.00 V by a 0.2C constant-current method at a temperature of 25°C. Thereafter, CC-CV charging (upper limit cell voltage 4.20 V) was performed by a 0.2C constant-current method and CC discharging was performed to 3.00 V by a 0.2C constant-current method. This charging and discharging at 0.2C was repeated three times.

Next, the lithium ion secondary battery was charged to 4.2 V by a 0.1C constant-current method and subsequently discharged to 3.0 V at 0.1C in an environment having a temperature of 25°C, and the 0.1C discharge capacity was determined. In addition, the lithium ion secondary battery was charged to 4.2 V at 0.1C and subsequently discharged to 3.0 V at 1C, and the 1C discharge capacity was determined. These measurements were performed for 10 cells for each lithium ion secondary battery produced as an electrochemical device in the examples and comparative examples, and average values of these measured values were taken to be the 0.1C discharge capacity (a) and the 1C discharge capacity (b). A ratio of the electric capacities was calculated (= b/a $\times$ 100(%)) and was evaluated by the following standard. A larger value for the ratio of electric capacities indicates that the lithium ion secondary battery (electrochemical device) has better rate characteristics.

A: Electric capacity ratio of 90% or more
B: Electric capacity ratio of not less than 80% and less than 90%
C: Electric capacity ratio of not less than 70% and less than 80%
D: Electric capacity ratio of less than 70%

(Example 1)

<Production of binder A1>

A reactor that included a stirring device and that had been thoroughly internally purged with nitrogen was charged with 270 parts of dehydrated cyclohexane and 0.53 parts of ethylene glycol dibutyl ether, and then 0.47 parts of n-butyllithium (15% cyclohexane solution) was further added thereto. All contents of the reactor were stirred at 60°C while 12.5 parts of dehydrated styrene was continuously added into the reactor over 40 minutes. Once this addition was complete, all contents of the reactor were further stirred in this state at 60°C for 20 minutes. The polymerization conversion rate at this point was determined to be 99.5% upon measurement of the reaction liquid by gas chromatography. Next, 75.0 parts of dehydrated isoprene was continuously added to the reaction liquid over 100 minutes, and stirring was continued in this state for 20 minutes after completion of the addition. The polymerization conversion rate at this point was 99.5%. Thereafter, a further 12.5 parts of dehydrated styrene was continuously added over 60 minutes, and stirring of all contents of the reactor was continued in this state for 30 minutes after completion of this addition. The polymerization conversion rate at this point was almost 100%. At this point, 0.5 parts of isopropyl alcohol was added to the reaction liquid to stop the reaction. In the resultant block copolymer [C1], the proportion constituted by structural units derived through 1,2- and 3,4-addition polymerization among all isoprene-derived structural units was 58%. Next, this polymer solution was transferred to a pressure-resistant reactor including a stirring device, 7.0 parts of nickel catalyst supported on diatomaceous earth carrier (produced by JGC Catalysts and Chemicals Ltd.; product name: E22U; supported nickel content: 60%) as a hydrogenation catalyst and 80 parts of dehydrated cyclohexane were added thereto, and mixing was performed. The inside of the reactor was purged with hydrogen gas, and hydrogen was also supplied into the reactor while stirring the solution so as to perform a hydrogenation reaction at a temperature of 190°C and a pressure of 4.5 MPa for 6 hours. Once the hydrogenation reaction was complete, the reaction solution was filtered to remove the hydrogenation catalyst, and then 1.0 parts of a xylene solution having 0.1 parts of pentaerythrityl tetrakis[3-(3,5-di-t-butyl-4-hydroxyphenyl)propionate] (produced by KOYO Chemical Research Center; product name: Songnox 1010) dissolved therein as a phenolic antioxidant was added to and dissolved in the filtrate. Cyclohexane was further added to produce a binder A1 solution of a specific concentration.

<Evaluation of binder A1>

-Proportion of structural units derived through 1,2- and 3,4-addition polymerization among chain conjugated diene compound-derived structural units in polymer block [B]-

The proportion constituted by structural units derived through 1,2- and 3,4-addition polymerization among chain conjugated diene compound-derived structural units in a polymer block [B] was calculated from a ratio of $^1$H bonded to carbon of a carbon-carbon unsaturated bond section in a polymer main chain and $^1$H bonded to carbon of a carbon-carbon unsaturated bond section in a polymer side chain in a $^1$H-NMR spectrum (in deuterated chloroform) of the block copolymer [C].

<Production of composite particles>

A composite particle production device including a circular tube shaped vessel having an internal diameter of 180 mm and an internal capacity of 2 L and including agitators at two axes in a vertical direction (axial direction of circular tube shaped vessel) and a horizontal direction (vertical direction corresponding to main agitator and horizontal direction corresponding to auxiliary agitator) inside of the circular tube shaped vessel was prepared as a granulation tank. Note that the main agitator was an inclined paddle including three main blades of 170 mm in diameter, and the auxiliary agitator had a V-type anchor blade of 30 mm in diameter. A mechanism by which feedstock was prevented from entering driving parts of the main agitator and the auxiliary agitator through sealing by air ventilation was also included. The composite particle production device was used to perform a preliminary stirring operation (i), a pre-composite particle formation operation (ii), and a particle adjustment operation (iii) in stated order to produce composite particles.

First, in the preliminary stirring operation (i), 96 parts by mass (1,344 g) of NMC532 (average particle diameter: 6 $\mu$m) as a positive electrode active material for a lithium ion battery and 2 parts by mass (28 g) of carbon black (BET specific surface area: 62 $m^2$/g; bulk density: 0.16 g/$cm^3$) as a conductive material were loaded into the granulation tank. Next, ventilation with 20 L/min (ventilation rate: 10/min) of room temperature air (hereinafter, also referred to as "sealing air") for sealing driving parts of the main agitator and the auxiliary agitator was performed, and 15 minutes of stirring was performed under operating conditions of a main agitator circumferential speed of 5 m/s and an auxiliary agitator circumferential speed of 6 m/s. The solid content concentration of the powder material after stirring was measured and was determined to be 99 mass% or more.

Next, as the pre-composite particle formation operation (ii), ventilation with 20 L/min of room temperature sealing air (ventilation rate: 10/min) was performed, and 2 parts by mass of solid content (280 g) of a composition containing the binder A1 and a solvent (solid content concentration: 10 mass%; viscosity index: 200 mPa·s; solvent: cyclohexane) was continuously added by a dropping funnel over 15 minutes under operating conditions of a main agitator circumferential speed of 5 m/s and an auxiliary agitator circumferential speed of 6 m/s.

Next, as the particle adjustment operation (iii), ventilation with 20 L/min of room temperature sealing air (ventilation rate: 10/min) was performed, and operation was performed under operating conditions of a main agitator circumferential speed of 2 m/s and an auxiliary agitator circumferential speed of 2 m/s for 10 minutes.

Various measurements were performed with respect to the composite particles that were produced by performing the above-described operations (i) to (iii) in stated order. The results are shown in Table 1.

<Production of positive electrode for lithium ion secondary battery>

The produced composite particles were supplied to pressing rolls (roll temperature: 100°C; pressing line pressure: 500 kN/m) of a roll press (Press Cutting Rough Surface Hot Roll produced by Hirano Gikenkogyo Co., Ltd.) using a metering feeder (NIKKA K-V SPRAYER produced by Nikka Ltd.). Aluminum foil of 20 $\mu$m in thickness was inserted between the pressing rolls, the composite particles supplied from the metering feeder were attached onto the aluminum foil, and pressure forming was performed with a forming rate of 1.5 m/min to obtain a positive electrode web for a lithium ion secondary battery including a positive electrode active material layer having a mass per unit area of 30 mg/$cm^2$. This positive electrode web was rolled by roll pressing to produce a sheet-shaped positive electrode including the aluminum foil and a positive electrode mixed material layer of 3.5 g/$cm^3$ in density.

<Production of negative electrode>

A 5 MPa pressure-resistant vessel equipped with a stirrer was charged with 33 parts of 1,3-butadiene as an aliphatic conjugated diene monomer, 3.5 parts of itaconic acid as an acidic group-containing monomer, 63.5 parts of styrene as an aromatic vinyl monomer, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. At the point at which the polymerization conversion rate reached 96%, cooling was performed to quench the polymerization reaction to yield a mixture containing a particulate binder (styrene-butadiene copolymer). This mixture was adjusted to pH 8 through addition of 5% sodium hydroxide aqueous solution and was subsequently subjected to thermal-vacuum distillation to remove unreacted monomer. Thereafter, the mixture was cooled to 30°C or lower to obtain a water dispersion containing a binder for a negative electrode.

Next, 48.75 parts of artificial graphite and 48.75 parts of natural graphite as negative electrode active materials and 1 part of carboxymethyl cellulose as a thickener were loaded into a planetary mixer. These materials were diluted to a solid content concentration of 60% using deionized water and were subsequently kneaded at a rotation speed of 45 rpm for 60 minutes. Thereafter, 1.5 parts in terms of solid content of the water dispersion containing the binder for a negative electrode obtained as described above was added and was kneaded therewith at a rotation speed of 40 rpm for 40 minutes. Next, deionized water was added so as to adjust the viscosity to 3,000 ± 500 mPa·s (measured by B-type viscometer at 25°C and 60 rpm) and thereby produce a slurry for a negative electrode mixed material layer.

Copper foil of 15 $\mu$m in thickness was then prepared as a current collector. The slurry for a negative electrode mixed material layer was applied onto the copper foil such as to have a coating weight after drying of 15 mg/$cm^2$ and

was dried at 60°C for 20 minutes and at 120°C for 20 minutes. Thereafter, 2 hours of heat treatment was performed at 150°C to obtain a negative electrode web. This negative electrode web was rolled by roll pressing to produce a sheet-shaped negative electrode including the copper foil and negative electrode mixed material layers (both sides) of 1.6 g/cm$^3$ in density.

<Production of lithium ion secondary battery>

The positive electrode and negative electrode described above and a separator (made of polyethylene; thickness: 12 μm) were used to produce a single-layer laminate cell (discharge capacity equivalent to 250 mAh) and were arranged inside aluminum packing. Thereafter, the inside of the aluminum packing was filled with a LiPF$_6$ solution of 1.0 M in concentration (solvent: mixed solvent of ethylene carbonate (EC)/diethyl carbonate (DEC) = 3/7 (volume ratio); additive: containing 2 volume% (solvent ratio) of vinylene carbonate) as an electrolyte solution. The aluminum packing was then closed by heat sealing at a temperature of 150°C to tightly seal an opening of the aluminum packing and thereby produce a lithium ion secondary battery. This lithium ion secondary battery was used to evaluate cycle characteristics and rate characteristics. The results are shown in Table 1.

(Example 2)

Various operations, measurements, and evaluations were performed in the same way as in Example 1 with the exception that a composition produced using a binder A2 (solid content concentration: 10 mass%; binder liquid viscosity: 400 mPa·s; solvent: acetone) that was produced as described below instead of the binder A1 was used in the pre-composite particle formation operation (ii) of "Production of composite particles". The results are shown in Table 1.

<Production of binder A2>

In a reactor having an internal capacity of 10 L, 100 parts of deionized water, 35 parts of acrylonitrile as a nitrile group-containing monomer, and 65 parts of 1,3-butadiene as an aliphatic conjugated diene monomer were loaded, 2 parts of potassium oleate as an emulsifier, 0.1 parts of potassium phosphate as a stabilizer, and 0.4 parts of tert-dodecyl mercaptan (TDM) as a molecular weight modifier were added thereto, and emulsion polymerization was performed at a temperature of 530°C in the presence of 0.35 parts of potassium persulfate as a polymerization initiator to cause copolymerization of acrylonitrile and 1,3-butadiene. At the point at which the polymerization conversion rate reached 95%, 0.2 parts of hydroxylamine sulfate was added per 100 parts of monomer to stop the polymerization. Next, heating was performed and then steam distillation was performed under reduced pressure at approximately 90°C to recover residual monomer. Thereafter, 0.1 parts of dibutylhydroxytoluene (BHT) as a substituted phenol was added to obtain a water dispersion of a polymer. A 25 mass% aqueous solution of calcium chloride (CaCh) was added as a coagulant under stirring in an amount such that the amount of calcium chloride was 3 parts relative to 100 parts of polymer solid content in the obtained water dispersion so as to cause coagulation of the polymer in the water dispersion. Thereafter, the polymer was filtered off and was water washed by passing deionized water in an amount 50 times that of the obtained polymer. The polymer was subsequently dried under reduced pressure at a temperature of 90°C to yield a polymer precursor. Next, the polymer precursor was hydrogenated by adopting an oil-layer hydrogenation method as a hydrogenation method. The polymer precursor was dissolved in acetone such that the concentration thereof was 12% to obtain an acetone solution of the polymer precursor as a hydrogenation subject. This acetone solution of the polymer precursor was loaded into an autoclave, 500 ppm of palladium/silica (Pd/SiO$_2$) as a catalyst was added relative to 100% of the polymer precursor serving as a hydrogenation subject, and then a hydrogenation reaction was performed at a hydrogen pressure of 3.0 MPa and a temperature of 90°C for 6 hours to yield a hydrogenation reaction product. Once the hydrogenation reaction was complete, the palladium/silica was filtered off, and acetone was added such as to give a specific solid content concentration and yield a binder A2 solution.

(Example 3)

Various operations, measurements, and evaluations were performed in the same way as in Example 2 with the exception that a conductive material was not charged into the stirring tank in the preliminary stirring operation (i) of "Production of composite particles" and that the composition added into the stirring tank in the pre-composite particle formation operation (ii) of "Production of composite particles" was changed to a composition containing a binder, a solvent, and a conductive material that was produced as described below. The results are shown in Table 1.

<Production of composition containing conductive material>

A mixture of a conductive material, a binder, and a solvent was prepared in a total amount of 1 kg with a solid content concentration of 10% by mixing 2 parts of carbon black (BET specific surface area: 62 $m^2$/g; bulk density: 0.16 g/$cm^3$) as a conductive material and 2 parts in terms of solid content of a binder solution A2 produced in the same way as in Example 2 and further adding acetone as a solvent. The obtained mixture was then subjected to 1 hour of dispersing treatment at a circumferential speed of 12 m/s using a bead mill (LMZ015 produced by Ashizawa Finetech Ltd.) in which zirconia beads of 0.5 mm in diameter were used so as to produce a composition containing a conductive material, a binder, and a solvent. The obtained composition had a solid content concentration of 10 mass% and a viscosity index of 300 mPa·s.

(Example 4)

Various operations, measurements, and evaluations were performed in the same way as in Example 1 with the exception that in the pre-composite particle formation operation (ii) of "Production of composite particles", the circumferential speed of the main agitator was changed to 3 m/s, the circumferential speed of the auxiliary agitator was changed to 5 m/s, and the ventilation rate of sealing air was changed to 5/min. The results are shown in Table 1.

(Example 5)

Various operations, measurements, and evaluations were performed in the same way as in Example 1 with the exception that in the pre-composite particle formation operation (ii) of "Production of composite particles", the circumferential speed of the main agitator was changed to 9 m/s and the circumferential speed of the auxiliary agitator was changed to 5 m/s. The results are shown in Table 1.

(Example 6)

Various operations, measurements, and evaluations were performed in the same way as in Example 1 with the exception that in the pre-composite particle formation operation (ii) of "Production of composite particles", the circumferential speed of the auxiliary agitator was changed to 2 m/s. The results are shown in Table 1.

(Example 7)

The circumferential speed of the auxiliary agitator was changed to 10 m/s in the pre-composite particle formation operation (ii) of "Production of composite particles", and a classification operation was performed as described below after the particle adjustment operation (iii) was performed. With the exception of these points, various operations, measurements, and evaluations were performed in the same way as in Example 1. The results are shown in Table 1.

<Classification operation>

The composite particles obtained through the particle adjustment operation (iii) were sifted using a sifting screen having an opening size of 100 $\mu$m, and coarse particles on the sifting screen were removed. Moreover, composite particles under the sifting screen were also sifted using a sifting screen having an opening size of 50 $\mu$m, particles under the sifting screen were removed, and composite particles remaining on the sifting screen were obtained.

(Example 8)

Various operations, measurements, and evaluations were performed in the same way as in Example 1 with the exception that the circumferential speed of the main agitator was changed to 0.4 m/s in the particle adjustment operation (iii) of "Production of composite particles". The results are shown in Table 1.

(Example 9)

Various operations, measurements, and evaluations were performed in the same way as in Example 1 with the exception that the circumferential speed of the main agitator was changed to 6 m/s in the particle adjustment operation (iii) of "Production of composite particles". The results are shown in Table 1.

(Example 10)

Various operations, measurements, and evaluations were performed in the same way as in Example 1 with the exception that the "Production of composite particles" step was changed as follows. The results are shown in Table 2.

The preliminary stirring operation (i) of "Production of composite particles" was split into two stages. Specifically, the time of a preliminary stirring operation inside of the granulation tank under the same conditions as in Example 1 was shortened to 1 minute. In addition, prior to that operation, a Miracle KCK® (Miracle KCK is a registered trademark in Japan, other countries, or both) (model: M·KCK-L) produced by Asada Iron Works Co., Ltd. was used to mix a mixture of NMC532 as a positive electrode active material for a lithium ion battery and carbon black as a conductive material under conditions of a rotation speed 40 rpm, a treatment rate of 1 L/h, and a treatment time of 10 minutes, and the resultant powder material was subjected to the preliminary stirring operation with a stirring time set as 1 minute.

Moreover, in the pre-composite particle formation operation (ii), the addition means of the composition was changed to two-fluid spraying, and the composition was continuously added into the system with a gas-liquid ratio (gas volume/liquid volume) and a spray area density indicated in Table 2. Furthermore, the circumferential speed of the main agitator was changed to 8 m/s and the ventilation rate was changed to 5/min in the pre-composite particle formation operation (ii).

Also, the operation time was changed to 1 minute in the particle adjustment operation (iii).

The maximum temperature in the system throughout these steps was 40°C.

(Example 11)

Various operations, measurements, and evaluations were performed in the same way as in Example 1 with the exception that the "Production of composite particles" step was changed as follows. The results are shown in Table 2.

The preliminary stirring operation (i) of "Production of composite particles" was split into two stages. Specifically, the time of a preliminary stirring operation inside of the granulation tank under the same conditions as in Example 1 was shortened to 1 minute. In addition, prior to that operation, a Miracle KCK® (model: M·KCK-L) produced by Asada Iron Works Co., Ltd. was used to mix a mixture of NMC532 as a positive electrode active material for a lithium ion battery and carbon black as a conductive material under conditions of a rotation speed 40 rpm, a treatment rate of 1 L/h, and a treatment time of 10 minutes, and the resultant powder material was subjected to the preliminary stirring operation with a stirring time set as 1 minute.

(Example 12)

Various operations, measurements, and evaluations were performed in the same way as in Example 1 with the exception that the "Production of composite particles" step was changed as follows. The results are shown in Table 2.

The circumferential speed of the main agitator was changed to 8 m/s and the ventilation rate was changed to 5/min in the pre-composite particle formation operation (ii) of "Production of composite particles".

Moreover, the operation time was changed to 1 minute in the particle adjustment operation (iii).

The maximum temperature in the system throughout steps (i) to (iii) was 40°C.

(Example 13)

Various operations, measurements, and evaluations were performed in the same way as in Example 1 with the exception that the "Production of composite particles" step was changed as follows. The results are shown in Table 2.

In the pre-composite particle formation operation (ii) of "Production of composite particles", the addition means of the composition was changed to two-fluid spraying, and the composition was continuously added into the system with a gas-liquid ratio (gas volume/liquid volume) and a spray area density indicated in Table 2.

The maximum temperature in the system throughout steps (i) to (iii) was 40°C.

(Example 14)

Various operations, measurements, and evaluations were performed in the same way as in Example 1 with the exception that the "Production of composite particles" step was changed as follows. The results are shown in Table 2.

In the pre-composite particle formation operation (ii) of "Production of composite particles", the addition means of the composition was changed to two-fluid spraying, and the composition was continuously added into the system with a gas-liquid ratio (gas volume/liquid volume) and a spray area density indicated in Table 2.

The maximum temperature in the system throughout steps (i) to (iii) was 36°C.

(Example 15)

Various operations, measurements, and evaluations were performed in the same way as in Example 1 with the exception that the "Production of composite particles" step was changed as follows. The results are shown in Table 2.

In the pre-composite particle formation operation (ii) of "Production of composite particles", the addition means of the composition was changed to two-fluid spraying, and the composition was continuously added into the system with a gas-liquid ratio (gas volume/liquid volume) and a spray area density indicated in Table 2. Moreover, the circumferential speed of the main agitator was changed to 15 m/s and the circumferential speed of the auxiliary agitator was changed to 2 m/s in the pre-composite particle formation operation (ii).

Furthermore, the circumferential speed of the auxiliary agitator was changed to 10 m/s in the particle adjustment operation (iii).

The maximum temperature in the system throughout steps (i) to (iii) was 42°C.

(Example 16)

Various operations, measurements, and evaluations were performed in the same way as in Example 1 with the exception that the "Production of composite particles" step was changed as follows. The results are shown in Table 2.

In the pre-composite particle formation operation (ii) of "Production of composite particles", the addition means of the composition was changed to two-fluid spraying, and the composition was continuously added into the system with a gas-liquid ratio (gas volume/liquid volume) and a spray area density indicated in Table 2. Moreover, the circumferential speed of the main agitator was changed to 3 m/s and the circumferential speed of the auxiliary agitator was changed to 10 m/s in the pre-composite particle formation operation (ii).

The maximum temperature in the system throughout steps (i) to (iii) was 34°C.

(Example 17)

Various operations, measurements, and evaluations were performed in the same way as in Example 1 with the exception that the "Production of composite particles" step was changed as follows. The results are shown in Table 2.

In the pre-composite particle formation operation (ii) of "Production of composite particles", the addition means of the composition was changed to two-fluid spraying, and the composition was continuously added into the system with a gas-liquid ratio (gas volume/liquid volume) and a spray area density indicated in Table 2. Moreover, the circumferential speed of the main agitator was changed to 8 m/s in the pre-composite particle formation operation (ii). Furthermore, the circumferential speed of the main agitator was changed to 0.4 m/s in the particle adjustment operation (iii).

The maximum temperature in the system throughout steps (i) to (iii) was 38°C.

(Example 18)

Various operations, measurements, and evaluations were performed in the same way as in Example 1 with the exception that the "Production of composite particles" step was changed as follows. The results are shown in Table 2.

In the pre-composite particle formation operation (ii) of "Production of composite particles", the addition means of the composition was changed to two-fluid spraying, and the composition was continuously added into the system with a gas-liquid ratio (gas volume/liquid volume) and a spray area density indicated in Table 2. Moreover, the circumferential speed of the auxiliary agitator was changed to 10 m/s in the pre-composite particle formation operation (ii).

Furthermore, the circumferential speed of the main agitator was changed to 6 m/s in the particle adjustment operation (iii).

The maximum temperature in the system throughout steps (i) to (iii) was 38°C.

(Comparative Example 1)

Various operations, measurements, and evaluations were performed in the same way as in Example 1 with the exception that the duration of the pre-composite particle formation operation (ii) was changed to 5 minutes and the flow rate of room temperature sealing air was changed to 40 L/min (ventilation rate: 20/min) in the pre-composite particle formation operation (ii). The results are shown in Table 3.

(Comparative Example 2)

Various operations, measurements, and evaluations were performed in the same way as in Example 1 with the exception that the circumferential speed of the main agitator was changed to 25 m/s and the flow rate of room temperature sealing air was changed to 100 L/min (ventilation rate: 50/min) in the pre-composite particle formation operation (ii). The results are shown in Table 3.

(Comparative Example 3)

Various operations, measurements, and evaluations were performed in the same way as in Example 1 with the exception that the circumferential speed of the auxiliary agitator was changed to 2 m/s in the pre-composite particle formation operation (ii), the circumferential speed of the auxiliary agitator was changed to 0.05 m/s in the particle adjustment operation (iii), the duration of operation (iii) was changed to 5 minutes, and the flow rate of room temperature sealing air was changed to 30 L/min (ventilation rate: 15/min) in operation (iii). The results are shown in Table 3.

(Comparative Example 4)

The circumferential speed of the auxiliary agitator was changed to 10 m/s in the pre-composite particle formation operation (ii), the circumferential speed of the auxiliary agitator was changed to 15 m/s in the particle adjustment operation (iii), the duration of operation (iii) was changed to 15 minutes, the flow rate of room temperature sealing air was changed to 10 L/min (ventilation rate: 5/min) in operation (iii), and a classification operation was performed after completion of the particle adjustment operation (iii). With the exception of these points, various operations, measurements, and evaluations were performed in the same way as in Example 1. The results are shown in Table 3.

<Classification operation>

The composite particles obtained through the particle adjustment operation (iii) were sifted using a sifting screen having an opening size of 90 $\mu$m, and coarse particles on the sifting screen were removed. Moreover, composite particles under the sifting screen were also sifted using a sifting screen having an opening size of 60 $\mu$m, particles under the sifting screen were removed, and composite particles remaining on the sifting screen were obtained.

(Comparative Example 5)

Various operations, measurements, and evaluations were performed in the same way as in Example 1 with the exception that the circumferential speed of the main agitator was changed to 0.05 m/s in the particle adjustment operation (iii), the duration of operation (iii) was set as 2 minutes, and the flow rate of room temperature sealing air was changed to 100 L/min (ventilation rate: 50/min) in operation (iii). The results are shown in Table 3.

(Comparative Example 6)

Various operations, measurements, and evaluations were performed in the same way as in Example 1 with the exception that the circumferential speed of the main agitator was changed to 12 m/s in the particle adjustment operation (iii), the duration of operation (iii) was set as 15 minutes, and the flow rate of room temperature sealing air was changed to 10 L/min (ventilation rate: 5/min) in operation (iii). The results are shown in Table 3.

[Table 1]

| | | | Example 1 | Example 2 | Example 3 | Example 4 | Example 5 | Example 6 | Example 7 | Example 8 | Example 9 |
|---|---|---|---|---|---|---|---|---|---|---|---|
| Materials | Electrode active material | Type | NMC532 | NMC532 | NMC532 | NMC532 | NMC532 | NMC532 | NMC532 | NMC532 | NMC532 |
| | | Amount (parts by mass) | 96 | 96 | 96 | 96 | 96 | 96 | 96 | 96 | 96 |
| | | Particle diameter ($\mu$m) | 6 | 6 | 6 | 6 | 6 | 6 | 6 | 6 | 6 |
| | Conductive material | Type | Carbon black | | | | | | | | |
| | | Amount (parts by mass) | 2 | 2 | 2 | 2 | 2 | 2 | 2 | 2 | 2 |
| | Binder | Type | Binder A | Binder A2 | Binder A2 | Binder A | Binder A | Binder A | Binder A | Binder A | Binder A |
| | | Amount (parts by mass) | 2 | | 2 | 2 | 2 | 2 | 2 | 2 | 2 |
| | Solvent | Solvent type | Cyclohexane | Acetone | Acetone | Cyclohexane | Cyclohexane | Cyclohexane | Cyclohexane | Cyclohexane | Cyclohexane |
| | | Boiling point (°C) | 80.8 | 56 | 56 | 80.8 | 80.8 | 80.8 | 80.8 | 80.8 | 80.8 |
| Production device | Granulation tank | Capacity (L) | 2 | 2 | 2 | 2 | 2 | 2 | 2 | 2 | 2 |
| | | Structure (diameter/ height) | 1.2 | 1.2 | 1.2 | 1.2 | 1.2 | 1.2 | 1.2 | 1.2 | 1.2 |
| | Agitator | Number of axes (axes) | 2 | | | | | | | | |
| | | Stirring axis arrangement | Main axis vertical, auxiliary axis horizontal | | | | | | | | |
| | | Angle $\theta$ formed by stirring axes (°) | 90 | | | | | | | | |
| | (i) Preliminary stoning operation | Powder material type | Active material, | conductive material | Active material | Active material, conductive material | | | | | |
| | | First stage (M·KCK-L) Rotation speed (rpm) | - | - | - | - | - | - | - | - | - |
| | | First stage (M·KCK-L) Treatment rate (L/h) | - | - | - | - | - | - | - | - | - |
| | | First stage (M·KCK-L) Treatment time (min) | - | - | - | - | - | - | - | - | - |

| | | | | | | Example 1 | Example 2 | Example 3 | Example 4 | Example 5 | Example 6 | Example 7 | Example 8 | Example 9 |
|---|---|---|---|---|---|---|---|---|---|---|---|---|---|---|
| | | | | Second stage (granulation) | Time (min) | 15 | 15 | is | 15 | 15 | 15 | 15 | 15 | 15 |
| | | | | | Solid content concentration (mass%) | 99 | 99 | 99 | 99 | 99 | 99 | 99 | 99 | 99 |
| | | | | | Main agitator circumferential speed (m/s) | 5 | 5 | 5 | 5 | 5 | 5 | 5 | 5 | 5 |
| | | | | | Auxiliary agitator circumferential speed (m/s) | 6 | 6 | 6 | 6 | 6 | 6 | 6 | 6 | 6 |
| | | | | | Ventilation rate (flow rate/device capacity,/min) | 10 | 10 | 10 | 10 | 10 | 10 | 10 | 10 | 10 |

EP 4 411 887 A1

|  |  |  |  |  | Example 1 | Example 2 | Example 3 | Example 4 | Example 5 | Example 6 | Example 7 | Example 8 | Example 9 |
|---|---|---|---|---|---|---|---|---|---|---|---|---|---|
| Production method | Operations | (ii) Pre-composite particle formation operation | Composition | Composition contents | Binder, solvent | Binder, solvent | Conductive material, binder, solvent | Binder, solvent | Binder, solvent | Binder, solvent | Binder, solvent | Binder, solvent | Binder, solvent |
|  |  |  |  | Composition addition time (min) | 15 | 15 | is | 15 | 15 | 10 | 15 | 15 | 15 |
|  |  |  |  | Mode of addition | Dropping funnel | Dropping funnel | Dropping funnel | Dropping funnel | Dropping funnel | Dropping funnel | Dropping funnel | Dropping funnel | Dropping funnel |
|  |  |  |  | Gas-liquid ratio during spray addition (-) | - | - | - | - | - | - | - | - | - |
|  |  |  |  | Spray area density during spray addition (g/mm) | - | - | - | - | - | - | - | - | - |
|  |  |  | Stirring conditions | Main agitator circumferential speed (m/s) | 5 | 5 | 5 | 3 | 9 | 5 | 5 | 5 | 5 |
|  |  |  |  | Auxiliary agitator circumferential speed (m/s) | 6 | 6 | 5 | 5 | 5 | 2 | 10 | 6 | 6 |
|  |  |  |  | Ventilation rate (flow rate/device capacity, /min) | 10 | 10 | 10 | 5 | 10 | 10 | 10 | 10 | 10 |

EP 4 411 887 A1

26

| | | | | | Example 1 | Example 2 | Example 3 | Example 4 | Example 5 | Example 6 | Example 7 | Example 8 | Example 9 |
|---|---|---|---|---|---|---|---|---|---|---|---|---|---|
| | | | | Composition viscosity index (viscosity/solid content) (units: mPa·s) | 20/0.1 = 200 | 20/0.1 = 200 | 30/0.1 = 300 | 20/0.1 = 200 | 20/0.1 = 200 | 20/0.1 = 200 | 20/0.1 = 200 | 20/0.1 = 200 | 20/0.1 = 200 |
| | | | (iii) Particle adjustment operation | Inclusion of operation | Yes | Yes | Yes | Yes | Yes | Yes | Yes | Yes | Yes |
| | | | | Main agitator circumferential speed (m/s) | 2 | 2 | 2 | 2 | 2 | 2 | 2 | 0.4 | 6 |
| | | | | Auxiliary agitator circumferential speed (m/s) | 2 | 2 | 2 | 2 | 2 | 2 | 2 | 2 | 2 |
| | | | | Time (min) | 10 | 10 | 10 | 10 | 10 | 10 | 10 | 10 | 10 |
| | | | | Ventilation rate (flow rate/ device capacity, /min) | 10 | 10 | 10 | 10 | 10 | 10 | 10 | 10 | 10 |
| | | | Maximum temperature in operations (i) to (iii) (°C) | | 38 | 30 | 33 | 33 | 33 | 38 | 38 | 38 | 38 |
| Attributes | A1 | Average value of area-equivalent diameter ($\mu$m) | | | 75 | 70 | 25 | 180 | 35 | 75 | 75 | 80 | 65 |
| | | Ratio relative to active material particle diameter (times) | | | 250 | 233 | 83 | 600 | 117 | 250 | 250 | 267 | 217 |
| | | Coefficient of variation of area-equivalent diameter (%) | | | 20 | 22 | 10 | 20 | 35 | 42 | 8 | 35 | 38 |
| | | Coefficient of density of composite particles (-) | | | 1.84 | 1.84 | 2.07 | 1.82 | 1.85 | 1.88 | 1.81 | 2.9 | 1.43 |
| | | Fluidity (evaluation by doctor blade thickness; units: $\mu$m) | | | 220 | 200 | 250 | 300 | 250 | 300 | 220 | 300 | 220 |
| | | Fluidity (evaluation by surface roughness) ($\mu$m$^3$/ 5.4 mm$^2$) | | | 0.26 | 0.22 | 0.8 | 0.5 | 0.7 | 0.6 | 0.3 | 0.48 | 0.36 |
| | | Volume resistivity ($\Omega$·cm) | | | 56 | 82 | 66 | 220 | 380 | 210 | 110 | 130 | 240 |
| | | Area circularity (-) | | | 0.80 | 0.87 | 0.86 | 0.705 | 0.905 | 0.72 | 0.9 | 0.703 | 0.906 |
| | | Convexity (-) | | | 0.85 | 0.89 | 0.93 | 0.745 | 0.925 | 0.76 | 0.91 | 0.751 | 0.913 |

(continued)

| | | Example 1 | Example 2 | Example 3 | Example 4 | Example 5 | Example 6 | Example 7 | Example 8 | Example 9 |
|---|---|---|---|---|---|---|---|---|---|---|
| Evaluation | Electrode flexibility | A | A | A | A | B | B | A | A | B |
| | Presence of active material cracking | A | A | A | B | A | A | B | B | A |
| | Cycle characteristics | A | A | B | B | B | A | B | B | A |
| | Amount of pas evolution during high-temperature storage | C | C | C | C | C | B | D | C | C |
| | Rate characteristics | A | A | B | B | C | B | A | A | B |

[Table 2]

EP 4 411 887 A1

29

| | | | | | Example 10 | Example 11 | Example 12 | Example 13 | Example 14 | Example 15 | Example 16 | Example 17 | Example 18 |
|---|---|---|---|---|---|---|---|---|---|---|---|---|---|
| Materials | Electrode active material | | | Type | NMC532 | NMC532 | NMC532 | NMC532 | NMC532 | NMC532 | NMC532 | NMC532 | NMC532 |
| | | | | Amount (parts by mass) | 96 | 96 | 96 | 96 | 96 | 96 | 96 | 96 | 96 |
| | | | | Particle diameter (μm) | 6 | 6 | 6 | 6 | 6 | 6 | 6 | 6 | 6 |
| | Conductive material | | | Type | Carbon black | | | | | | | | |
| | | | | Amount (parts by mass) | 2 | 2 | 2 | 2 | 2 | 2 | 2 | 2 | 2 |
| | Binder | | | Type | Binder A1 | Binder A1 | Binder A1 | Binder A1 | Binder A1 | Binder A1 | Binder A1 | Binder A1 | Binder A1 |
| | | | | Amount (parts by mass) | 2 | 2 | 2 | 2 | 2 | 2 | 2 | 2 | 2 |
| | Solvent | | | Solvent type | Cyclohexane | Cyclohexane | Cyclohexane | Cyclohexane | Cyclohexane | Cyclohexane | Cyclohexane | Cyclohexane | Cyclohexane |
| | | | | Boiling point (°C) | 80.8 | 80.8 | 80.8 | 80.8 | 80.8 | 80.8 | 80.8 | 80.8 | 80.8 |
| Production method | Production device | Granulation tank | | Capacity (L) | 2 | 2 | 2 | 2 | 2 | 2 | 2 | 2 | 2 |
| | | | | Structure (diameter/height) | 1.2 | 1.2 | 1.2 | 1.2 | 1.2 | 1.2 | 1.2 | 1.2 | 1.2 |
| | | Agitator | | Number of axes (axes) | 2 | 2 | 2 | 2 | 2 | 2 | 2 | 2 | 2 |
| | | | | Stirring axis arrangement | Main axis vertical, auxiliary axis horizontal | | | | | | | | |
| | | | | Angle θ formed by stirring axes (°) | 90 | 90 | 90 | 90 | 90 | 90 | 90 | 90 | 90 |
| | Operations | (i) Preliminary stirring operation | | Powder material type | Active material, conductive material | | | | | | | | |
| | | | First stage (M·KCK-L) | Rotation speed (rpm) | 40 | 40 | - | - | - | - | - | - | - |
| | | | | Treatment rate (L/h) | 1 | 1 | - | - | - | - | - | - | - |
| | | | | Treatment time (min) | 10 | 10 | - | - | - | - | - | - | - |
| | | | Second stage (granulation tank) | Time (min) | 1 | 1 | 15 | 15 | 15 | 15 | 15 | 15 | 15 |
| | | | | Solid content concentration (mass%) | 99 | 99 | 99 | 99 | 99 | 99 | 99 | 99 | 99 |
| | | | | Main agitator circumferential speed (m/s) | 5 | 5 | 5 | 5 | 5 | 5 | 5 | 5 | 5 |
| | | | | Auxiliary agitator circumferential speed (m/s) | 6 | 6 | 6 | 6 | 6 | 6 | 6 | 6 | 6 |
| | | | | Ventilation rate (flow rate/device capacity; /min) | 10 | 10 | 10 | 10 | 10 | 10 | 10 | 10 | 10 |
| | | (ii) Pre-composite particle formation operation | Composition | Composition contents | Binder, solvent | | | | | | | | |
| | | | | Composition addition time (min) | 15 | 15 | 15 | 15 | 15 | 15 | 15 | 15 | 15 |
| | | | | Mode of addition | Two-fluid spray | Dropping funnel | Dropping funnel | Two-fluid spray | Two-fluid spray | Two-fluid spray | Two-fluid spray | Two-fluid spray | Two-fluid spray |
| | | | | Gas-liquid ratio during spray addition (-) | 1.5 | - | - | 1.7 | 1.4 | 1.8 | 1.3 | 1.5 | 1.5 |
| | | | | Spray area density during spray addition (g/mm$^2$/min) | 0.39 | - | - | 0.36 | 0.43 | 0.33 | 0.46 | 0.39 | 0.39 |
| | | | Stirring conditions | Main agitator circumferential speed (m/s) | 8 | 5 | 8 | 5 | 5 | 15 | 3 | 8 | 5 |
| | | | | Auxiliary agitator circumferential speed (m/s) | 6 | 6 | 6 | 6 | 6 | 2 | 10 | 6 | 10 |
| | | | | Ventilation rate (flow rate/device capacity; /min) | 5 | 10 | 5 | 10 | 10 | 10 | 10 | 10 | 10 |
| | | | | Composition viscosity index (viscosity/solid content) (units: mPa·s) | 20/0.1 = 200 | 20/0.1 = 200 | 20/0.1 = 200 | 20/0.1 = 200 | 20/0.1 = 200 | 20/0.1 = 200 | 20/0.1 = 200 | 20/0.1 = 200 | 20/0.1 = 200 |
| | | (iii) Particle adjustment operation | | Inclusion of operation | Yes | Yes | Yes | Yes | Yes | Yes | Yes | Yes | Yes |
| | | | | Main agitator circumferential speed (m/s) | 2 | 2 | 2 | 2 | 2 | 2 | 2 | 0.4 | 6 |
| | | | | Auxiliary agitator circumferential speed (m/s) | 2 | 2 | 2 | 2 | 2 | 10 | 2 | 2 | 2 |
| | | | | Time (min) | 1 | 10 | 1 | 10 | 10 | 10 | 10 | 10 | 10 |
| | | | | Ventilation rate (flow rate/device capacity; /min) | 10 | 10 | 10 | 10 | 10 | 10 | 10 | 10 | 10 |
| | | | | Maximum temperature in operations (i) to (iii) (°C) | 40 | 38 | 40 | 40 | 36 | 42 | 34 | 38 | 38 |
| Attributes | | | | Average value of area-equivalent diameter (μm) | 75 | 75 | 70 | 50 | 90 | 25 | 120 | 68 | 75 |
| | | | | Ratio relative to active material particle diameter (times) | 250 | 250 | 233 | 167 | 300 | 83 | 400 | 227 | 250 |
| | | | | Coefficient of variation of area-equivalent diameter (%) | 20 | 20 | 20 | 20 | 20 | 40 | 10 | 41 | 10 |
| | | | | Coefficient of density of composite particles (-) | 2.0 | 2.0 | 2.0 | 1.9 | 1.9 | 1.8 | 2.0 | 1.9 | 1.9 |
| | | | | Fluidity (evaluation by doctor blade thickness; units: μm) | 220 | 220 | 220 | 220 | 220 | 350 | 400 | 220 | 220 |
| | | | | Fluidity (evaluation by surface roughness) (μm$^3$/5.4 mm$^2$) | 0.20 | 0.28 | 0.26 | 0.60 | 0.28 | 0.70 | 0.40 | 0.50 | 0.15 |
| | | | | Volume resistivity (Ω·cm) | 50 | 56 | 56 | 56 | 56 | 450 | 45 | 56 | 56 |
| | | | | Area circularity (-) | 0.80 | 0.80 | 0.85 | 0.82 | 0.83 | 0.72 | 0.90 | 0.701 | 0.908 |
| | | | | Convexity (-) | 0.85 | 0.85 | 0.87 | 0.87 | 0.88 | 0.92 | 0.83 | 0.742 | 0.913 |
| Evaluation | | | | Electrode flexibility | A | A | A | A | A | B | A | B | A |
| | | | | Presence of active material cracking | A | A | A | A | A | A | B | B | A |
| | | | | Cycle characteristics | A | A | A | B | B | A | B | B | A |
| | | | | Amount of gas evolution during high-temperature storage | A | B | B | B | B | C | B | C | B |
| | | | | Rate characteristics | AA | AA | A | A | A | B | A | B | A |

[Table 3]

| | | | | Comparative Example 1 | Comparative Example 2 | Comparative Example 3 | Comparative Example 4 | Comparative Example 5 | Comparative Example 6 |
|---|---|---|---|---|---|---|---|---|---|
| Materials | Electrode active material | | Type | NMC532 | NMC532 | NMC532 | NMC532 | NMC532 | NMC532 |
| | | | Amount (parts bv mass) | 96 | 96 | 96 | 96 | 96 | 96 |
| | | | Particle diameter (μm) | 6 | 6 | 6 | 6 | 6 | 6 |
| | Conductive material | | Tvpe | Carbon black | | | | | |
| | | | Amount (parts by mass) | 2 | 2 | 2 | 2 | 2 | 2 |
| | Binder | | Type | Binder A | Binder A | Binder A | Binder A | Binder A | Binder A |
| | | | Amount (parts by mass) | 2 | 2 | 2 | 2 | 2 | 2 |
| | Solvent | | Solvent type | Cyclohexane | Cyclohexane | Cyclohexane | Cyclohexane | Cyclohexane | Cyclohexane |
| | | | Boiling point (°C) | 80.8 | 80.8 | 80.8 | 80.8 | 80.8 | 80.8 |
| Production device | | Granulation tank | Capacity (L) | 2 | 2 | 2 | 2 | 2 | 2 |
| | | | Structure (diameter/height) | 1.2 | 1.2 | 1.2 | 1.2 | 1.2 | 1.2 |
| | | Agitator | Number of axes (axes) | 2 | | | | | |
| | | | Stirring axis arrangement | Main axis vertical, auxiliary axis horizontal | | | | | |
| | | | Angle θ formed bv stirring axes (°) | 90 | | | | | |
| | | | Powder material type | Active material, conductive material | | | | | |
| | | First stage (M·KCK-L) | Rotation speed (rpm) | - | - | - | - | - | - |
| | | | Treatment rate (L/h) | - | - | - | - | - | - |
| | | | Treatment time (min) | - | - | - | - | - | - |

| | | | | | Comparative Example 1 | Comparative Example 2 | Comparative Example 3 | Comparative Example 4 | Comparative Example 5 | Comparative Example 6 |
|---|---|---|---|---|---|---|---|---|---|---|
| Production method | Operations | (i) Preliminary stirring operation | Second stage (granulation tank) | Time (min) | 15 | 15 | 15 | 15 | 5 | 15 |
| | | | | Solid content concentration (mass%) | 99 | 99 | 99 | 99 | 99 | 99 |
| | | | | Main agitator circumferential speed (m/s) | 5 | 5 | 5 | 5 | 5 | 5 |
| | | | | Auxiliary agitator circumferential speed (m/s) | 6 | 6 | 6 | 6 | 6 | 6 |
| | | | | Ventilation rate (flow rate/ device capacity; /min) | 10 | 10 | 10 | 10 | 10 | 10 |
| | | (ii) Pre-composite particle formation operation | Composition | Composition contents | Binder, solvent | | | | | |
| | | | | Composition addition time (min) | 5 | 15 | 15 | 15 | 15 | 15 |
| | | | | Mode of addition | Dropping funnel | Dropping funnel | Dropping funnel | Dropping funnel | Dropping funnel | Dropping funnel |
| | | | | Gas-liquid ratio during spray addition (-) | - | - | - | - | - | - |
| | | | | Spray area density during spray addition (g/mm$^2$/min) | - | - | - | - | - | - |

EP 4 411 887 A1

| | | | | | Comparative Example 1 | Comparative Example 2 | Comparative Example 3 | Comparative Example 4 | Comparative Example 5 | Comparative Example 6 |
|---|---|---|---|---|---|---|---|---|---|---|
| | | | Stirring conditions | Main agitator circumferential speed (m/s) | 5 | 25 | 5 | 5 | 5 | 5 |
| | | | | Auxiliary agitator circumferential speed (m/s) | 6 | 6 | 2 | 10 | 6 | 6 |
| | | | | Ventilation rate (flow rate/ device capacity; /min) | 20 | 50 | 10 | 10 | 10 | 10 |
| | | | Composition viscosity index (viscositv/solid content) (units: mPa·s) | | 20/0.1 = 200 | 20/0.1 = 200 | 20/0.1 = 200 | 20/0.1 = 200 | 20/0.1 = 200 | 20101 = 200 |
| | | (iii) Particle adjustment operation | Inclusion of operation | | Yes | Yes | Yes | Yes | Yes | Yes |
| | | | Main agitator circumferential speed (m/s) | | 2 | 2 | 2 | 2 | 0.05 | 12 |
| | | | Auxiliary agitator circumferential speed (m/s) | | 2 | 2 | 0.05 | 15 | 2 | 2 |
| | | | Time (min) | | 10 | 10 | 5 | 15 | 2 | 15 |
| | | | Ventilation rate (flow rate/ device capacity; /min) | | 10 | 10 | 15 | 5 | 50 | 5 |
| | | Maximum temperature in operations (i) to (iii) (°C) | | | 38 | 38 | 34 | 30 | 28 | 36 |
| Attributes | Average value of area-equivalent diameter (μm) | | | | 265 | 15 | 70 | 73 | 103 | 63 |
| | Ratio relative to active material particle diameter (times) | | | | 883 | 50 | 233 | 243 | 343 | 210 |
| | Coefficient of variation of area-equivalent diameter (%) | | | | 12 | 25 | 55 | 4 | 36 | 15 |
| | Coefficient of density of composite particles (-) | | | | 1.67 | 1.94 | 2.06 | 1.83 | 3.55 | 1.23 |
| | Fluidity (evaluation by doctor blade thickness; units: μm) | | | | 500 | 350 | 450 | 220 | 450 | 450 |

(continued)

| | | Comparative Example 1 | Comparative Example 2 | Comparative Example 3 | Comparative Example 4 | Comparative Example 5 | Comparative Example 6 |
|---|---|---|---|---|---|---|---|
| | Fluidity (evaluation by surface roughness) ($\mu m^3$/5.4 $mm^2$) | 1.5 | 22 | 0.89 | 0.24 | 1.36 | 022 |
| | Volume resistivity ($\Omega \cdot cm$) | 310 | 580 | 610 | 420 | 290 | 390 |
| | Area circularity (-) | 0.55 | 0.94 | 0.58 | 0.922 | 0.65 | 0.69 |
| | Convexity(-) | 0.71 | 0.98 | 0.71 | 0.954 | 0.743 | 0.943 |
| Evaluation | Electrode flexibility | C | D | D | C | C | D |
| | Presence of active material cracking | C | C | C | D | D | B |
| | Cycle characteristics | D | C | C | D | D | C |
| | Amount of gas evolution during high-temperature storage | C | D | C | C | C | C |
| | Rate characteristics | C | D | D | C | B | D |

EP 4 411 887 A1

It can be seen from Tables 1 to 3 that through composite particles having an average value of area-equivalent diameter, a coefficient of variation of area-equivalent diameter, and a coefficient of density that were within specific ranges, it was possible to increase the flexibility of an electrode and inhibit cracking of an electrode active material in the electrode, and it was also possible to improve cycle characteristics and rate characteristics of an electrochemical device including the electrode.

INDUSTRIAL APPLICABILITY

According to the present disclosure, it is possible to provide composite particles that can increase the flexibility of an electrode and inhibit cracking of an electrode active material in the electrode, and that can also improve cycle characteristics of an electrochemical device including the electrode.

Moreover, according to the present disclosure, it is possible to provide an electrode for an electrochemical device containing the presently disclosed composite particles and an electrochemical device including this electrode for an electrochemical device.

REFERENCE SIGNS LIST

1      granulation tank
2      main agitator
21     main blade
3      auxiliary agitator
31     auxiliary blade
RA1    first stirring axis
RA2    second stirring axis

**Claims**

1. Composite particles comprising an electrode active material, a conductive material, and a binder, wherein the composite particles have

   an average value of area-equivalent diameter of not less than 20 $\mu$m and not more than 250 $\mu$m,
   a coefficient of variation of area-equivalent diameter calculated according to formula 1:

   (standard deviation of area-equivalent diameter/average value of area- equivalent diameter) $\times$ 100

   of not less than 5% and not more than 50%, and
   a coefficient of density calculated according to formula 2:

$$\text{compressed density/bulk density}$$

   of not less than 1.3 and not more than 3.5.

2. The composite particles according to claim 1, having a volume resistivity of not less than 1 $\Omega\cdot$cm and not more than 3,000 $\Omega\cdot$cm.

3. The composite particles according to claim 1, having an area circularity of not less than 0.50 and not more than 0.93 and a convexity of not less than 0.70 and not more than 0.97.

4. The composite particles according to claim 1, wherein the binder is a polymeric material that dissolves in a non-aqueous solvent having a boiling point of 95°C or lower at 1 atm.

5. An electrode for an electrochemical device comprising an electrode mixed material layer containing the composite particles according to any one of claims 1 to 4.

**6.** An electrochemical device comprising the electrode for an electrochemical device according to claim 5.

# FIG. 1

# FIG. 2

## INTERNATIONAL SEARCH REPORT

| | International application No. |
|---|---|
| | **PCT/JP2022/026405** |

**A. CLASSIFICATION OF SUBJECT MATTER**

$H01M\ 4/525$(2010.01)i; $H01G\ 11/38$(2013.01)i; $H01M\ 4/131$(2010.01)i; $H01M\ 4/36$(2006.01)i; $H01M\ 4/505$(2010.01)i
FI:   H01M4/525; H01M4/36 B; H01M4/131; H01M4/505; H01G11/38

According to International Patent Classification (IPC) or to both national classification and IPC

**B. FIELDS SEARCHED**

Minimum documentation searched (classification system followed by classification symbols)

H01M4/525; H01G11/38; H01M4/131; H01M4/36; H01M4/505

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2019/189801 A1 (SHINSHU UNIVERSITY) 03 October 2019 (2019-10-03) claims | 1-6 |
| A | CN 103199251 A (AMPEREX TECHNOLOGY LTD.) 10 July 2013 (2013-07-10) paragraph [0030] | 1-6 |
| A | JP 2015-60704 A (TOYOTA JIDOSHA KABUSHIKI KAISHA) 30 March 2015 (2015-03-30) claims | 1-6 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 August 2022** | **13 September 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**
Information on patent family members

International application No.

**PCT/JP2022/026405**

| Patent document cited in search report | | | Publication date (day/month/year) | Patent family member(s) | Publication date (day/month/year) |
|---|---|---|---|---|---|
| WO | 2019/189801 | A1 | 03 October 2019 | (Family: none) | |
| CN | 103199251 | A | 10 July 2013 | (Family: none) | |
| JP | 2015-60704 | A | 30 March 2015 | (Family: none) | |

Form PCT/ISA/210 (patent family annex) (January 2015)

**EP 4 411 887 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005124801 A1
- JP 2006060193 A
- WO 2015029829 A1